Europäisches Patentamt

European Patent Office

Office européen des brevets

(19)

(11)  **EP 1 150 470 A2**

(12)  **EUROPEAN PATENT APPLICATION**

(43) Date of publication:
  **31.10.2001  Bulletin 2001/44**

(51) Int Cl.7: **H04L 27/26**

(21) Application number: **01303097.8**

(22) Date of filing: **30.03.2001**

(84) Designated Contracting States:
  **AT BE CH CY DE DK ES FI FR GB GR IE IT LI LU
  MC NL PT SE TR**
  Designated Extension States:
  **AL LT LV MK RO SI**

(30) Priority:  **27.04.2000  JP 2000132858
          22.05.2000  JP 2000150665**

(71) Applicant: **ALPS ELECTRIC CO., LTD.
  Ota-ku Tokyo 145 (JP)**

(72) Inventors:
  • **Otaki, Yukio, c/o Alps Electric Co., Ltd.
    Tokyo 145 (JP)**
  • **Kitada, Kazutoshi, c/o Alps Electric Co., Ltd.
    Tokyo 145 (JP)**

(74) Representative: **Kensett, John Hinton
  Saunders & Dolleymore,
  9 Rickmansworth Road
  Watford, Hertfordshire WD18 0JU (GB)**

(54)  **OFDM receiving device**

(57)    The present invention provides an OFDM receiving device which accurately removes a delayed wave having a delay time of a guard interval time or more, eliminates a post-demodulation bit error, and achieves low power consumption of a delay equalizing means. The OFDM receiving device includes an auto-correlation detecting means (4) for detecting auto-correlation of an OFDM modulated signal, a delay equalizing means (31) for eliminating a signal component delayed over a guard interval time of the OFDM modulated signal, based on the result of detection by the auto-correlation detecting means, and an OFDM demodulating means (5) for removing a guard interval signal inserted upon modulation from a signal outputted from the delay equalizing means and extracting and demodulating an effective symbol signal. The delay equalizing means stops its delay equalizing operation when the level of the delayed signal component is low. Further, the delay equalizing means is provided with a delay time correcting means which corrects a delay time for the output signal of the delay equalizing means, based on the result of comparison by a power comparing means.

## FIG. 1

EP 1 150 470 A2

**Description**

BACKGROUND OF THE INVENTION

Field of the Invention:

The present invention relates to a device for receiving an OFDM-modulated signal like a ground-wave digital TV broadcast in Japan and Europe, and particularly to an OFDM receiving device which has a delayed-wave eliminating function and is suitable for use in vehicle installation.

Description of the Related Art:

As a system for transmitting (modulating) digital audio signals and video signals typified by ground-wave digital TV broadcasts, a multi-carrier modulation system or scheme based on OFDM (Orthogonal Frequency Division Multiplexing) is proceeding toward practical utilization in recent years. In the broadcasting according to the present modulation system, coded data is divided and distributed to carriers ranging from a thousand to a few thousands or more, and transmitted in multiplexed form.

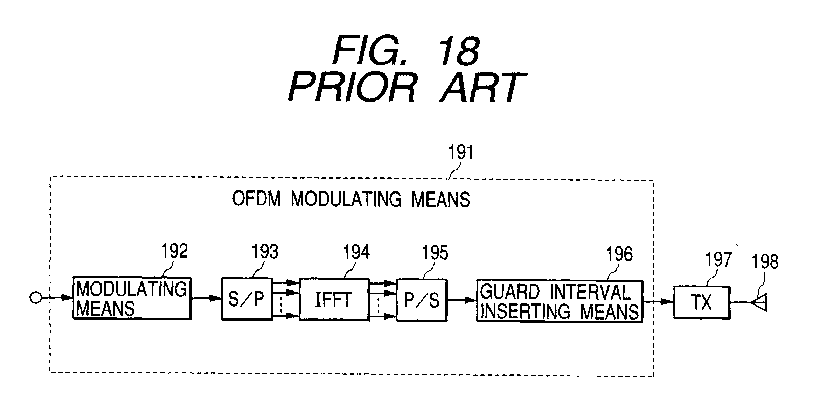

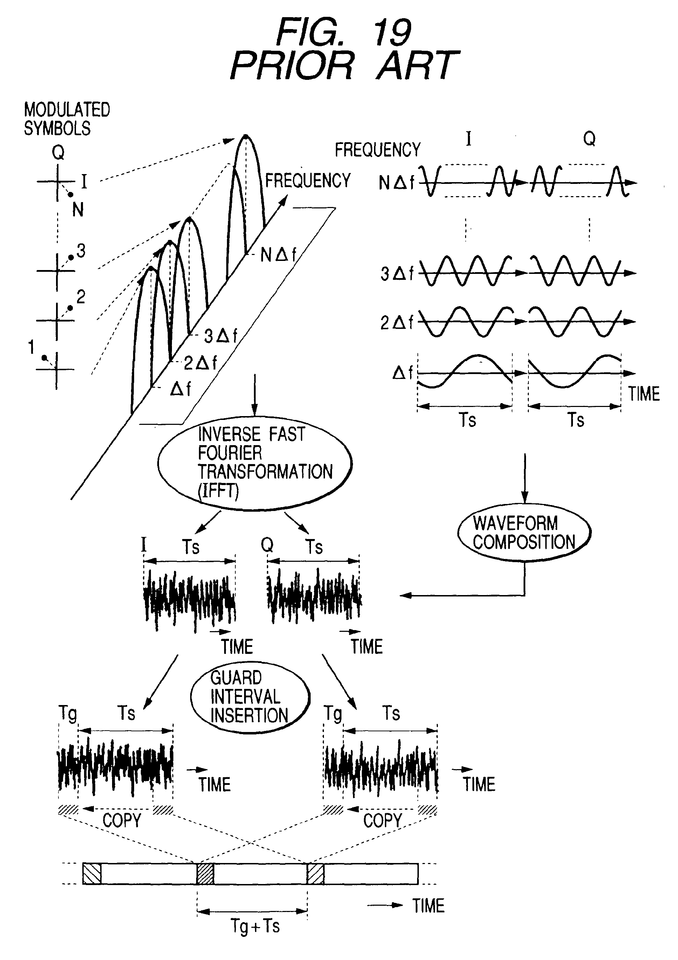

A configurational block diagram of an OFDM transmitting device is shown in Fig. 18, and an OFDM-based modulating process is conceptually shown in Fig. 19.

In Fig. 18, an OFDM modulating means 191 comprises a modulating means 192 for effecting modulation such as QPSK or the like on an input digital signal, a serial/parallel converting means (S/P) 193 for converting the modulated serial signal to a parallel signal, an inverse fast Fourier transforming means (IFFT) 194 for inversely Fourier-transforming the converted parallel signal, a parallel/serial converting means (P/S) 195 for converting the inversely Fourier-transformed signal to a serial sequence and outputting it as a time signal, and a guard interval inserting means 196 for inserting a guard interval into the converted signal. Further, reference numeral 197 indicates a transmitting means (TX), and reference numeral 198 indicates an antenna, respectively.

Modulated symbols obtained by information-modulating the input digital signal by the modulating means 192 according to a predetermined modulation system or scheme (e.g., QPSK modulation) are converted to a lower-speed modulated symbol sequence or string, i.e., a modulated symbol string of N carriers placed side by side at predetermined frequency intervals (Δf) and respectively orthogonal to one another by the serial/parallel converting means (S/P) 193 as shown in Fig. 19. The modulated symbol string is subjected to inverse fast Fourier transformation (IFFT) by the inverse fast Fourier transforming means (IFFT) 194 and waveform-combined by the parallel/serial converting means (P/S) 195, whereby an in-phase component (hereinafter described as "I") and an orthogonal component (hereinafter described as "Q") of orthogonal time-base signals are produced.

Further, predetermined times (guard interval times) Tg at the ends of signals partitioned by predetermined times (effective symbol times) Ts through the use of the guard interval inserting means 196 are copied onto and inserted into start portions of the time-base signals I and Q. They are defined as guide intervals. Thus, the time-base signals with the guard intervals inserted therein are produced from the guard interval inserting means 196 as a base-band time-series signal.

The guard intervals are inserted to take countermeasures against delayed-wave disturbance (interference) developed upon signal reception and are symbols which accommodate adjacent symbol interference developed due to a relative delay in signal under a multipath environment.

Here, the time-base signal having a time (Tg+Ts) is handled as an OFDM symbol corresponding to one unit. The guard intervals are removed according to on-reception processing, and hence only a signal having a Ts time is extracted and demodulated as an effective symbol signal. Further, the base-band time-series signal produced from the guard interval inserting means 196 is placed on a predetermined carrier by the transmitting means (TX) 197 including a D/A converting means, where it is power-amplified, followed by radiation into the air through the antenna 198.

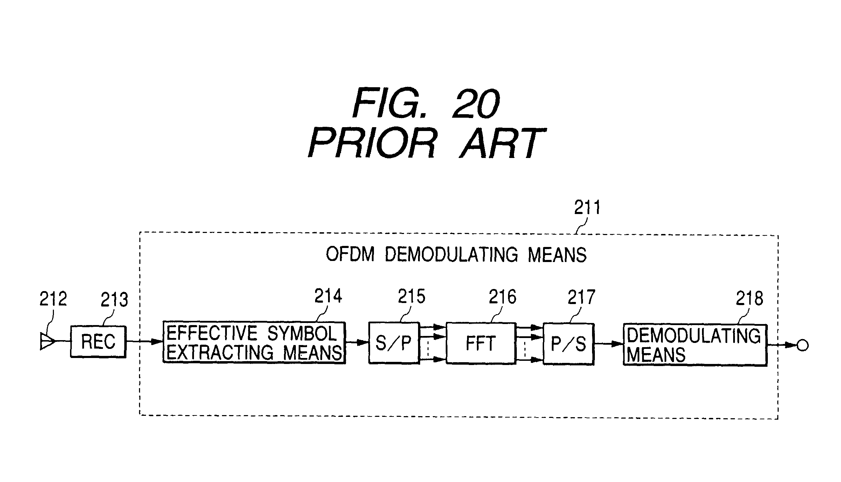

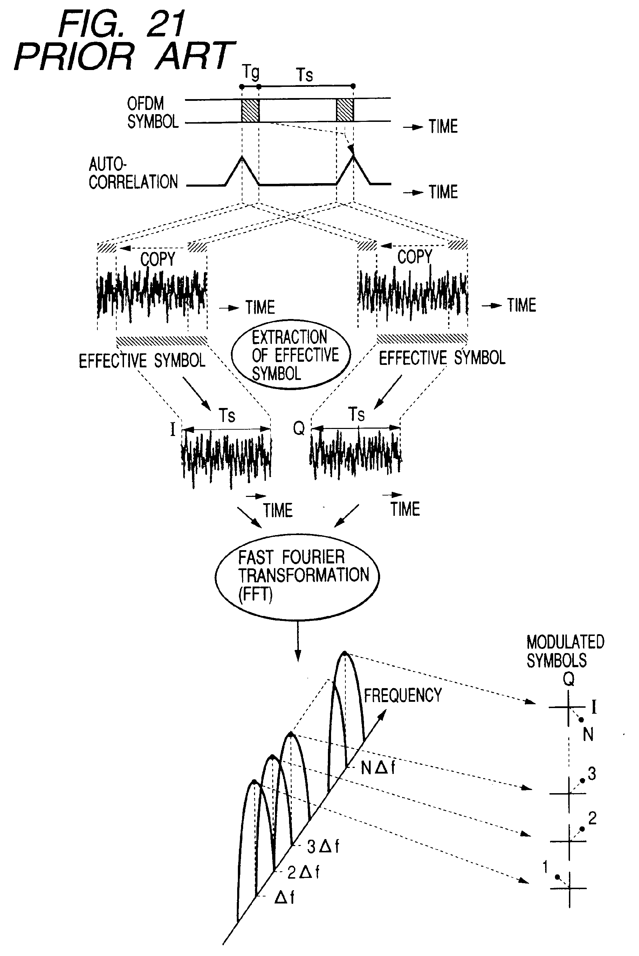

Next, a configuration of a basic OFDM receiving device is shown in Fig. 20, and an OFDM-based demodulating process is conceptually shown in Fig. 21, respectively.

In Fig. 20, the OFDM receiving device has an antenna 212, a receiving means (REC) 213 and an OFDM demodulating means 211.

Further, the OFDM demodulating means 211 has an effective symbol extracting means 214 for removing each guard interval from a received signal and extracting an effective symbol signal, a serial/parallel converting means (S/P) 215 for converting the effective symbol signal to a parallel signal, a fast Fourier transforming means (FFT) 216 for Fourier-transforming the parallel signal, a parallel/serial converting means (P/S) 217 for converting the Fourier-transformed signal to a serial signal, and a demodulating means 218.

Referring to Fig. 20, a signal wave captured by the antenna 212 is amplified and frequency-converted by the receiving means (REC) 213, which in turn is outputted as a base-band time-series signal, followed by demodulation by the OFDM demodulating means 211.

In the OFDM demodulating means 211, as shown in Fig. 21, the effective symbol extracting means 214 refers to a received OFDM symbol and calculates the sum of products on two symbol signals away from each other by a Ts time over a Tg time to generate an auto-correlation signal. This signal is defined as a reference signal. Subsequently, the peak (maximum value) of the reference signal (auto-correlation signal) of the OFDM symbol is detected and the timing provided to start each guard interval inserted based on the peak of the auto-correlation signal is detected. Further, the guard intervals are removed to extract I and Q of effective symbols.

Next, the serial/parallel converting means (S/P) 215 converts the effective symbol signal to a parallel signal. The fast Fourier transforming means (FFT) 216 effects fast Fourier transformation (FFT) on the converted parallel signal to extract N modulated symbols of carriers shifted in frequency Δf by Δf. The so-extracted modulated symbols are converted to a serial time sequence by the parallel/serial converting means (P/S) 217. The converted serial time sequence is demodulated according to a predetermined system by the demodulating means 218 to decode a digital signal.

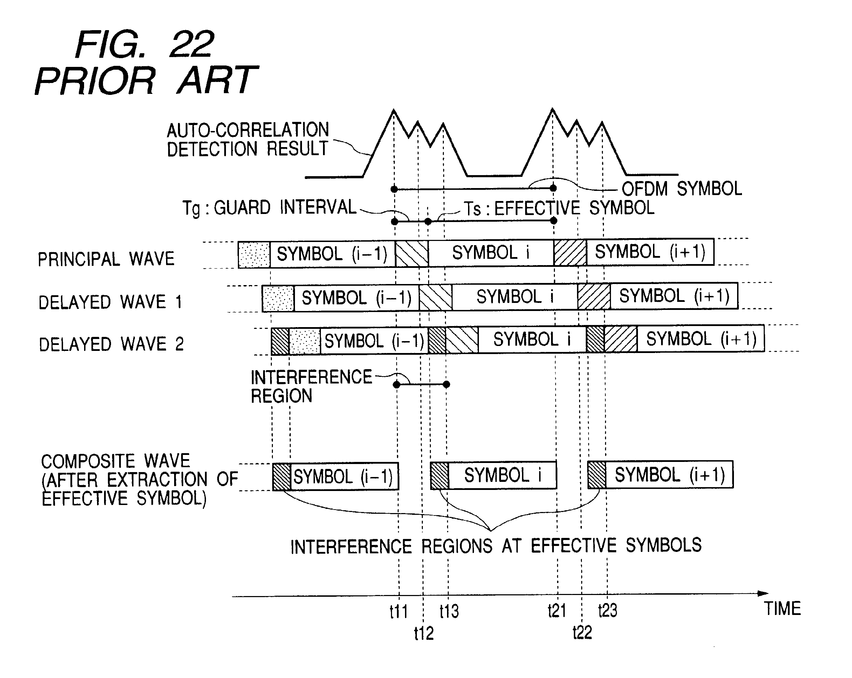

Fig. 22 is an explanatory view showing symbol-to-symbol interference developed in an OFDM modulated signal including delay signals. The present drawing shows an example in which two delayed waves are inputted. When a principal wave is defined as the reference, then a delayed wave 1 whose delay time is shorter than a guard interval period, undergoes interference by a guard interval signal but causes no interference at each effective symbol. On the other hand, a delayed wave 2 whose delay time is longer than the guard interval time, causes interference between effective symbols. Thus, a problem arises in that an error occurs after signal demodulation.

In particular, an in-vehicle OFDM receiving device might produce a signal long in delay time according to ambient circumstances (such as a building, geographic features, etc.) placed while a vehicle is in transit, and has a problem in that it is placed under the circumstances that a demodulation error is easy to occur due to fixed reception.

With a view toward handling the above problems, the present inventors has previously proposed an OFDM receiving device having the function of equalizing signals each having a delay longer than a guard interval time and removing them (Japanese Patent Application No. 2000-087570).

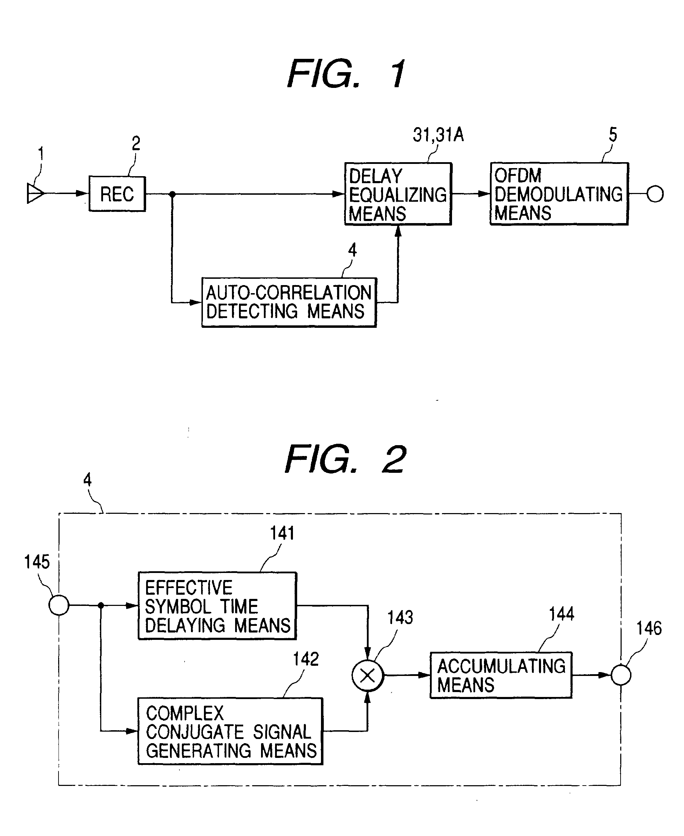

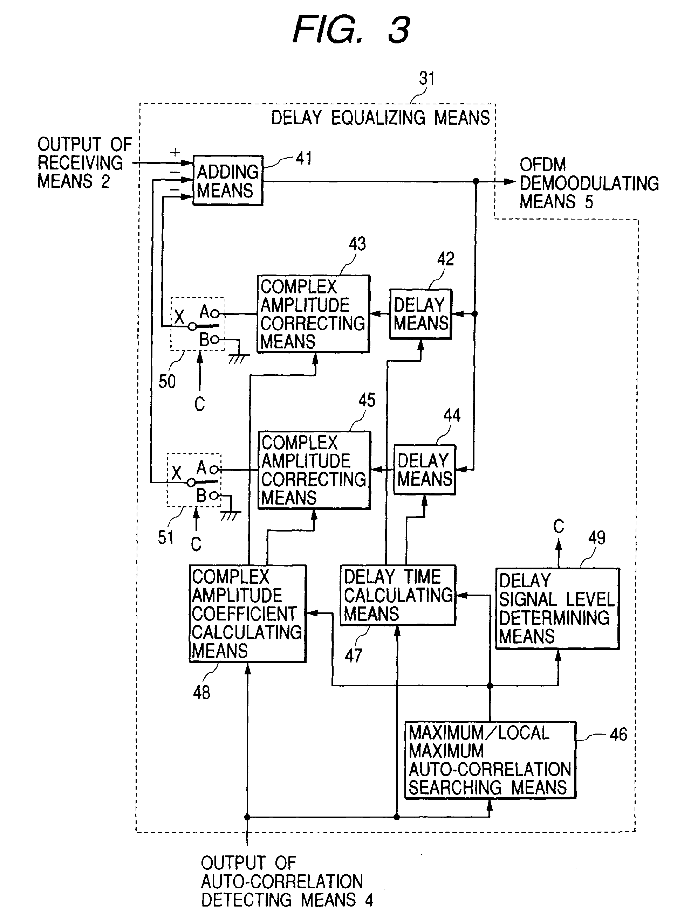

Fig. 1 is a block diagram showing a configuration of the OFDM receiving device proposed by the present inventors according to Japanese Patent Application No. 2000-087570 and is also a block diagram according to an embodiment of the invention of the present application. However, a specific configuration of a delay equalizing means is different from that employed in the OFDM receiving device already proposed by the present inventors as will be described later. Specific configurations of delay equalizing means employed in OFDM receiving devices according to the present application are respectively shown in Figs. 3 through 10. When the OFDM receiving device (Fig. 1) according to the present application is compared with the known OFDM receiving device shown in Fig. 20, the OFDM receiving device according to the present application is different from the known OFDM receiving device in that a delay equalizing means 31 and an auto-correlation detecting means 4 are provided between a receiving means 2 and an OFDM demodulating means 5.

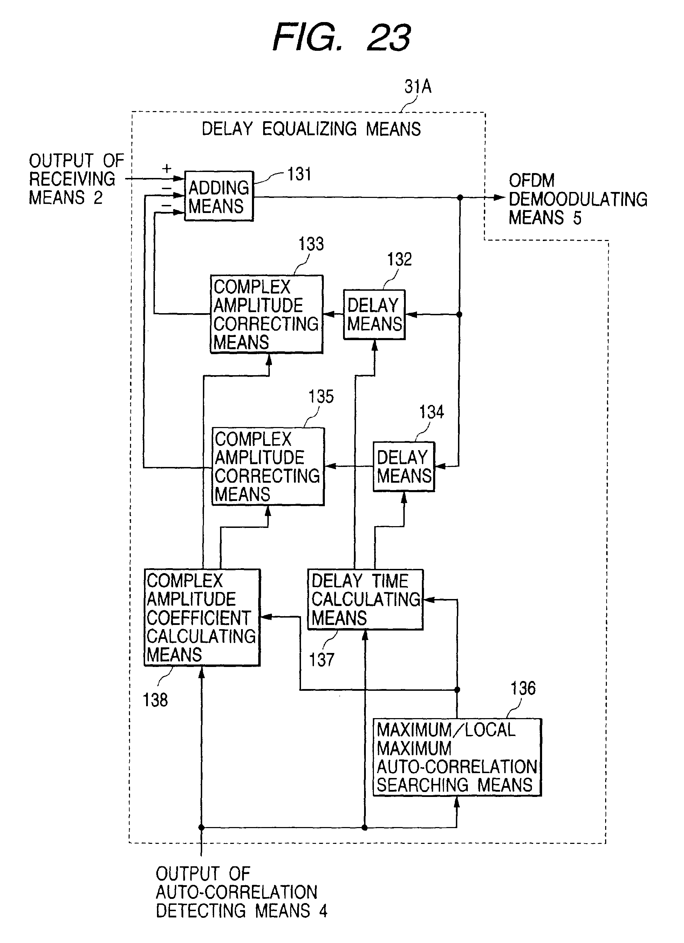

Fig. 2 is a block diagram showing a specific configuration of the auto-correlation detecting means 4 shown in Fig. 1. Fig. 23 is a block diagram showing a specific configuration of the delay equalizing means 31A employed in the OFDM receiving device shown in Fig. 1, which has already been proposed by the present inventors prior to the present application. Incidentally, Fig. 23 shows a configuration of a delay equalizing means capable of equalizing delay waves up to two.

When an OFDM modulated signal lying in a base band corresponding to the output of the receiving means 2 is inputted to a signal terminal 145 in the auto-correlation detecting means 4 shown in Fig. 2, an effective symbol time delaying means 141 first delays it by an effective symbol time, and simultaneously a complex conjugate signal generating means 142 generates a signal complex-conjugated with the input OFDM modulated signal. A multiplying means 143 multiplies the respective outputs of the effective symbol time delaying means 141 and the complex conjugate signal generating means 142. When an accumulating means 144 accumulates the multiplied signal only for a predetermined time (guard interval time), an auto-correlation detection signal is calculated by the accumulating means 144 and outputted from a signal terminal 146.

When a guard interval signal is outputted from the effective symbol time delaying means 141 where no delayed waves are not included in the received OFDM modulated signal (in the case of a principal wave alone), its copy source signal is outputted from the one complex conjugate signal generating means 142. Therefore, the peak of the auto-correlation detection signal starts to be outputted. Further, when the time elapses by the guard interval period, the auto-correlation detection signal indicates the peak value (maximum value).

On the other hand, when each delayed wave is included in the OFDM modulated signal, the peak value corresponding to a principal wave is produced in the auto-correlation detection signal. In addition to it, the peak value (local maximum value) corresponding to the delayed wave is produced with a delay equivalent to its delay time alone.

The so-obtained auto-correlation detection signal and the OFDM modulated signal outputted from the receiving means 2 are inputted to the delay equalizing means 31A shown in Fig. 23, and the delay equalizing means 31A performs delay equalization.

The delay equalizing means 31A shown in Fig. 23 has two-system feedback means which perform their negative feedback. One system comprising a delay means 132 and a complex amplitude correcting means 133 removes one signal, whereas another system comprising a delay means 134 and a complex amplitude correcting means 135 removes another signal. When an adding means 131 subtracts the outputs of the two feedback means from the input OFDM modulated signal, delayed waves up to two are removed, so that the delay-equalized OFDM modulated signal is outputted.

Here, a maximum/local maximum auto-correlation searching means 136 calculates a maximum auto-correlation value, a local maximum auto-correlation value, and the difference in time between timings respectively indicative of the maximum auto-correlation value and the local maximum auto-correlation value with the auto-correlation detection signal inputted from the auto-correlation detecting means 4 as the source, and outputs them to a delay time calculating means 137 and a complex amplitude coefficient calculating means 138. In response to the same, the delay time calculating means 137 calculates and sets delay times for the delay means 132 and 134, and the complex amplitude coefficient calculating means 138 calculates and sets complex amplitude coefficients used for corrections at the complex amplitude correcting means 133 and 135.

When, at this time, each calculated delay time for the delay signal is shorter than the guard interval time, the delay time calculating means 137 sets the delay times for the delay means 132 and 134 to zero. Correspondingly, the delay means 132 and 134 respectively output a zero signal without delaying its input signal.

A problem arises in that while the above-described delay equalizing means 31A comprises a logic circuit, it increases in circuit scale and needs to operate at a high-speed clock, thereby increasing its power consumption.

Referring to Fig. 1 as well, the delay equalizing means 31 first calculates incoming times of an OFDM symbol for a principal wave and an OFDM symbol for each delayed wave, based on the peak position of the auto-correlation signal detected by the auto-correlation detecting means 4, respectively. Next, the delay equalizing means 31 obtains a delay time for each delayed wave with the incoming time of the principal wave as the reference and eliminates the delayed wave, based on it. However, a plurality of peak values might appear locally even when the auto-correlation signal in the OFDM signal increases in correlation. A problem arises in that when the delay time for each delayed wave is set according to a false auto-correlation peak at this time, each delayed wave cannot be removed accurately and hence a bit error takes place after OFDM demodulation.

SUMMARY OF THE INVENTION

The present invention has been made in view of the foregoing situation. It is therefore an object of the present invention to provide an OFDM receiving device, which executes delay equalization of OFDM modulated signals at a stage preceding OFDM demodulation and achieves low power consumption of a delay equalizing means.

According to one aspect of the present invention, for achieving the above object, there is provided an OFDM receiving device of the present invention, comprising auto-correlation detecting means which detects auto-correlation of an OFDM modulated signal, delay equalizing means which removes a signal component delayed over a guard interval time of the OFDM modulated signal, based on the result of detection by the auto-correlation detecting means, and OFDM demodulating means which eliminates a guard interval signal inserted upon modulation from a signal outputted from the delay equalizing means and extracts and demodulates an effective symbol signal, and wherein the delay equalizing means stops a delay equalizing operation when the level of the delayed signal component is low.

In the OFDM receiving device of the present invention, auto-correlation of an OFDM modulated signal is detected by auto-correlation detecting means. A signal component delayed over a guard interval time of the OFDM modulated signal is removed by delay equalizing means, based on the result of detection by the auto-correlation detecting means. A guard interval signal inserted upon modulation is eliminated from a signal outputted from the delay equalizing means by OFDM demodulating means, whereby an effective symbol signal is extracted and demodulated. In the OFDM receiving device, a delay equalizing operation is stopped by the delay equalizing means according to the level of the delayed signal component.

Preferably, the delay equalizing means includes feedback means each of which feeds back the output signal of the delay equalizing means, based on a delay time calculated from a maximum auto-correlation value in local maximum auto-correlation values other than the maximum auto-correlation value, of auto-correlation values detected by the auto-correlation detecting means, and a complex amplitude coefficient calculated from the local maximum auto-correlation values, and delay signal level determining means which determines the level of the delayed signal component, based on the auto-correlation values.

In the OFDM receiving device of the present invention, the delay equalizing means is configured in such a manner that the output signal of the delay equalizing means is fed back by each feedback means on the basis of a delay time calculated from a maximum auto-correlation value in local maximum auto-correlation values other than the maximum auto-correlation value, of auto-correlation values detected by the auto-correlation detecting means, and a complex amplitude coefficient calculated from the local maximum auto-correlation values, and the level of the delayed signal component is determined by delay signal level determining means on the basis of the auto-correlation values.

Preferably, in the OFDM receiving device of the present invention, the delay equalizing means bypasses the input of the delay equalizing means toward the output thereof when the delay signal level determining means determines that the level of the delayed signal component is lower than that of a main signal component.

In an embodiment of the present invention, the delay equalizing means bypasses the input of the delay equalizing means toward the output thereof when it is determined by delay signal level determining means that the level of a delayed signal component is lower than that of a main signal component.

Still further, in an embodiment of the present invention, the delay equalizing means controls all or some of the outputs of the feedback means to zero when delay signal level determining means determines that the level of a delayed signal component is lower than that of a main signal component.

In an embodiment the delay equalizing means controls all or some of the outputs of the feedback means to zero where it is determined by delay signal level determining means that the level of a delay signal component is lower than that of a main signal component.

Still further, in an embodiment of the present invention, the delay equalizing means stops the operation of the feedback means when delay signal level determining means determines that the level of a delayed signal component is lower than that of a main signal component.

In an embodiment of the present invention, the delay equalizing means stops the operation of the feedback means where it is determined by delay signal level determining means that the level of a delay signal component is lower than that of a main signal component.

According to another aspect of the present invention, for achieving the above object, there is provided an OFDM receiving device of the present invention, comprising auto-correlation detecting means which detects auto-correlation of an OFDM modulated signal, delay equalizing means which removes a signal component delayed over a guard interval time of the OFDM modulated signal, based on the result of detection by the auto-correlation detecting means, power comparing means which compares power inputted to the delay equalizing means and power outputted therefrom, and OFDM demodulating means which eliminates a guard interval signal inserted upon modulation from a signal outputted from the delay equalizing means and extracts and demodulates an effective symbol signal, and wherein the delay equalizing means is provided with delay time correcting means which corrects a delay time for the output signal of the delay equalizing means, based on the result of comparison by the power comparing means.

When a comparison is made between power inputted to delay equalizing means and power outputted therefrom, whether or not a delay time for a signal outputted from the delay equalizing means is accurately set and the delay equalizing means is being activated, i.e., the delay equalizing means has accurately removed a signal component delayed over a guard interval time, can be detected. Thus, even if the result of detection by auto-correlation detecting means has an error based on a false auto-correlation peak, a delay-time correction is allowed, and each delayed wave can accurately be removed. When the input power and output power of the delay equalizing means are compared to correct the delay time, a post-demodulation bit error can be reduced simultaneously.

It is desirable that delay equalizing means is provided with feedback means each of which feeds back the output signal of the delay equalizing means, based on a delay time calculated from a maximum auto-correlation value in local maximum auto-correlation values other than the maximum auto-correlation value, of auto-correlation values detected by auto-correlation detecting means, and a complex amplitude coefficient calculated from the local maximum auto-correlation values, and delay time correcting means corrects a delay time for each feedback means.

Thus, since the delay equalizing means is provided with a feedback system in which a delay time is corrected by power comparing means, in addition to a feed forward system in which a delay time is determined according to the result of detection by auto-correlation detecting means, the operation of the delay equalizing means can be stabilized.

It is desirable that delay time correcting means refers to the result of comparison by power comparing means and corrects a delay time where power outputted from delay equalizing means is judged to be larger than power inputted thereto.

Thus, the delay time correcting means can reliably be activated only when it is necessary to correct the delay time.

It is also desirable that the delay time correcting means refers to the result of comparison by power comparing means and continuously corrects a delay time until the output power of the delay equalizing means is judged to be lower than the input power thereof.

Thus, the delay time correcting means is capable of continuously correcting a delay time and reliably carrying out its correction.

It is desirable that OFDM demodulating means eliminates a guard interval signal from a signal outputted from delay equalizing means with the time when a maximum auto-correlation value indicative of a maximum value, of auto-correlation values detected by auto-correlation detecting means is detected, as the reference, and extracts an effective symbol signal.

Thus, since effective symbol extracting means eliminates the need for the calculation of each auto-correlation value anew, a circuit configuration can be simplified.

BRIEF DESCRIPTION OF THE DRAWINGS

While the specification concludes with claims particularly pointing out and distinctly claiming the subject matter which is regarded as the invention, it is believed that the invention, the objects and features of the invention and further objects, features and advantages thereof will be better understood from the following description taken in connection with the accompanying drawings in which:

Fig. 1 is a block diagram showing a configuration of an OFDM receiving device according to a first embodiment of the present invention;

Fig. 2 is a block diagram illustrating a specific configuration of an auto-correlation detecting means shown in Fig. 1;

Fig. 3 is a block diagram depicting a specific configuration of a delay equalizing means shown in Fig. 1;

Fig. 4 is a block diagram showing a specific configuration of a delay equalizing means employed in an OFDM receiving device according to a second embodiment of the present invention;

Fig. 5 is a block diagram illustrating a specific configuration of a delay equalizing means employed in an OFDM receiving device according to a third embodiment of the present invention;

Fig. 6 is a block diagram depicting a specific configuration of a delay equalizing means employed in an OFDM receiving device according to a fourth embodiment of the present invention;

Fig. 7 is a block diagram showing a specific configuration of a delay equalizing means employed in an OFDM receiving device according to a fifth embodiment of the present invention;

Fig. 8 is a block diagram illustrating a specific configuration of a delay equalizing means employed in an OFDM receiving device according to a sixth embodiment of the present invention;

Fig. 9 is a block diagram showing a specific configuration of a delay equalizing means employed in an OFDM receiving device according to a seventh embodiment of the present invention;

Fig. 10 is a block diagram depicting a specific configuration of a delay equalizing means employed in an OFDM receiving device according to an eighth embodiment of the present invention;

Fig. 11 is a waveform diagram showing one example of an auto-correlation detection signal outputted from an auto-correlation detecting means;

Fig. 12 is a waveform diagram illustrating one example of data outputted from an OFDM demodulating means with respect to respective OFDM modulated signals of a principal wave and a delayed wave when an input/output terminal of the delay equalizing means shown in Fig. 1 is bypassed;

Fig. 13 is a waveform diagram showing one example of data outputted from an OFDM demodulating means 15 with respect to each OFDM modulated signal including a principal wave and a delayed wave when the input/output terminal of the delay equalizing means shown in Fig. 1 is bypassed;

Fig. 14 is a block diagram illustrating a specific configuration of a delay signal level determining means shown in Fig. 3;

Fig. 15 is a waveform diagram depicting one example of an auto-correlation detection signal outputted from the auto-correlation detecting means shown in Fig. 1;

Fig. 16 is a characteristic diagram showing the relationship between the difference in level between auto-correlation values and a control signal C, which are used when a comparing means in Fig. 21 makes a decision;

Fig. 17 is an explanatory view illustrating the relationship between margin levels and OFDM demodulated symbols used in Fig. 23;

Fig. 18 is a block diagram showing a configuration of an OFDM transmitting device;

Fig. 19 is an explanatory view conceptually depicting the process of modulation by OFDM;

Fig. 20 is a block diagram showing a configuration of an OFDM receiving device;

Fig. 21 is an explanatory view conceptually illustrating the process of demodulation by OFDM;

Fig. 22 is an explanatory view showing symbol-to-symbol interference with an OFDM modulated signal including delayed waves;

Fig. 23 is a block diagram showing a specific configuration of the delay equalizing means employed in the OFDM receiving device shown in Fig. 1, which has been proposed by the present inventors before the present application;

Fig. 24 is a block diagram illustrating a configuration of an OFDM receiving device according to an embodiment of the present invention;

Fig. 25 is a block diagram showing a specific configuration of an auto-correlation detecting means shown in Fig. 24;

Fig. 26 is a block diagram depicting a specific configuration of a delay equalizing means shown in Fig. 24;

Fig. 27 is a block diagram showing a specific configuration of a power detecting means employed in a power comparing means shown in Fig. 24;

Fig. 28 is a block diagram showing a specific configuration of a comparing means employed in the power comparing means shown in Fig. 24;

Fig. 29 is an explanatory view showing the relationship between each error in delay time and each input/output power difference developed in the delay equalizing means shown in Fig. 24;

Fig. 30 is an explanatory view illustrating phase trajectories of QPSK demoduation symbols subsequent to OFDM demodulation by an OFDM demodulating means shown in Fig. 24;
Fig. 31 is an explanatory view for descrining the operation of the OFDM receiving device shown in Fig. 24; and
Fig. 32 is another explanatory view for describing the operation of the OFDM receiving device shown in Fig. 24.

## DETAILED DESCRIPTION OF THE PREFERRED EMBODIMENTS

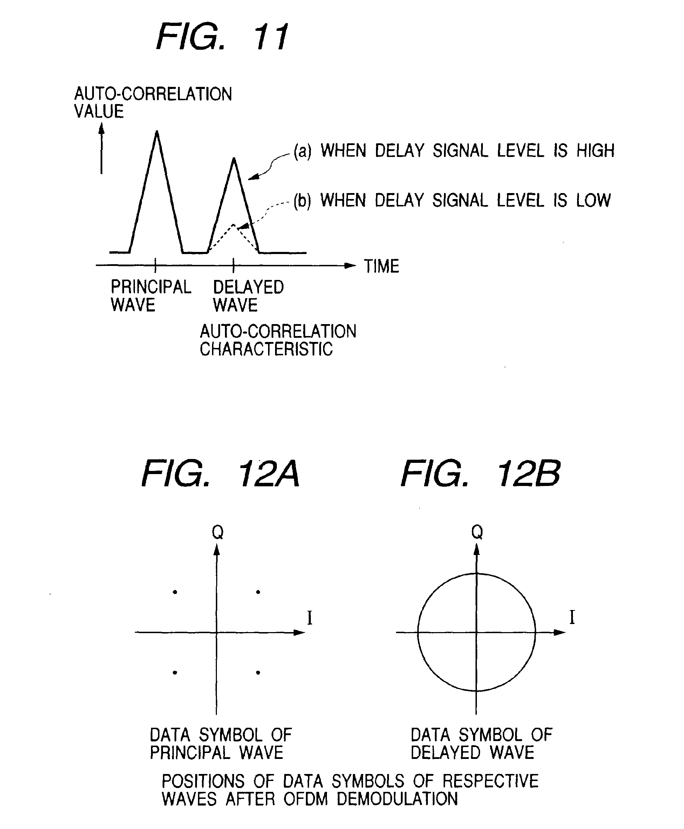

Preferred embodiments of the present invention will hereinafter be described in detail with reference to the accompanying drawings. Prior to the description of the embodiments of the present invention, a description will be made of control operations of a delay equalizing means for eliminating a delayed wave causing symbol-to-symbol interference, which is a characterized portion of an OFDM receiving device according to the present invention. Fig. 11 is a waveform diagram showing one example of an auto-correlation detection signal outputted from an auto-correlation detecting means 4 (see Fig. 1) and shows waveforms corresponding to two types of delayed signal levels. As to each auto-correlation value obtained from the auto-correlation detection signal, its local maximum value (or maximum value) corresponds to the level of an input signal as shown in Fig. 11. If the level of a principal wave is taken as the reference, then the level of a delayed wave is high in the case of the waveform indicated by (a) in Fig. 11, but the level of the delayed wave is quite low in the case of the waveform indicated by (b) in Fig. 11.

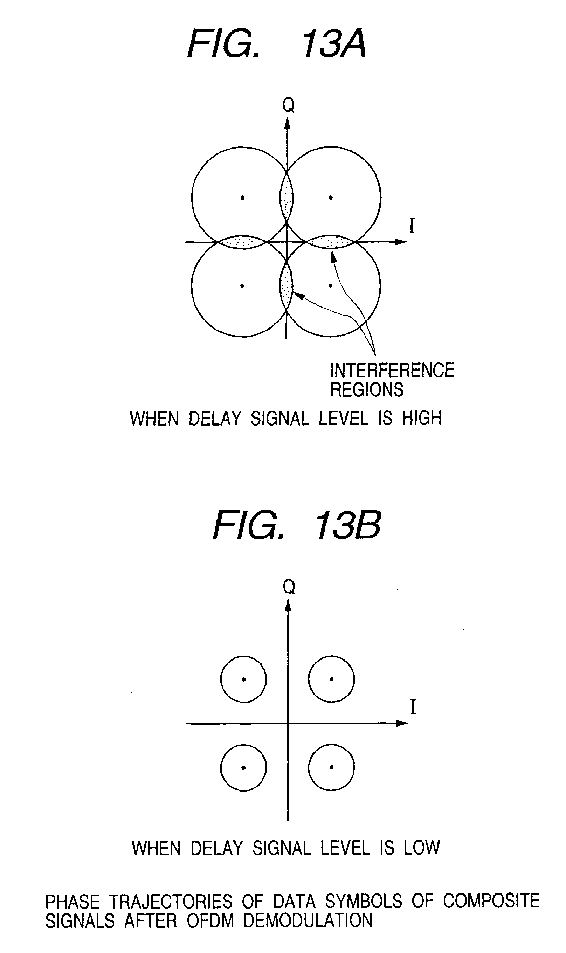

Fig. 12 is a waveform diagram showing one example of data outputted from an OFDM demodulating means 5 (see Fig. 1) where OFDM modulated signals corresponding to a principal wave and a delayed wave are individually received, and Fig. 13 is a waveform diagram showing one example of data outputted from the OFDM demodulating means 5 where their combined wave is inputted, respectively. Any thereof is a waveform diagram at the time that an input/output terminal of a delay equalizing means 31 (see Fig. 1) is bypassed. In a manner similar to Fig. 11 shown previously, Fig. 13 shows waveforms corresponding to two types of delayed signal levels. Incidentally, QPSK is used for information modulation herein.

Phase trajectories of output data symbols corresponding to the respective signals of the above-described principal wave and delayed wave will be described with reference to Fig. 12. When the OFDM modulated signal corresponding to the principal wave alone is first demodulated by the OFDM demodulating means 5 with the peak value of the auto-correlation detection signal corresponding to the principal wave as the reference, its demodulated symbols are distributed as four lattice or grid points over an I - Q plane.

On the other hand, the wave delayed in time from the principal wave is considered in a manner similar to the principal wave with the peak value of the auto-correlation detection signal corresponding to the principal wave as the reference. When an OFDM modulated signal corresponding to the delayed wave alone is demodulated with the peak value of the auto-correlation detection signal corresponding to the principal wave as the reference, its demodulated symbol results in a distribution rotated with the origin of the I-Q plane as the center. Here, the magnitude (distance from the origin) of each grid point and the radius of rotation thereof are proportional to the level of each of the principal wave and delayed wave.

When the OFDM modulated signals including such principal and delayed waves simultaneously are demodulated, demodulated symbols as viewed from the output of the OFDM demodulating means 5 show such distributions that delayed-wave symbols are rotated with four grid points of the principal wave as shown in Fig. 13. When, at this time, such an auto-correlation detection signal as indicated by (a) in Fig. 11 is obtained and the level of each delayed signal is set high, the radius of rotation of the symbol of each delayed wave becomes large as shown in Fig. 13A. Therefore, symbol-to-symbol interference occurs and many bit errors take place. Thus, it is necessary to equalize the delayed signals through the use of the delay equalizing means 31 and remove the same in this case.

On the other hand, when such an auto-correlation detection signal as indicated by (b) in Fig. 11 is obtained and the level of each delayed signal is set low, no symbol-to-symbol interference occurs as shown in Fig. 13B. Therefore, the symbols can accurately be determined even though the delayed waves are not eliminated, thus no leading to a bit error as it is. Accordingly, it is not necessary to use the delay equalizing means 31 in this case.

If the delay equalizing operation of the delay equalizing means 31 is stopped when the level of each delayed-signal component is low, through the use of the characteristic of the above-described OFDM modulated signal, then the delay equalizing means 31 can be reduced in power consumption without the occurrence of the bit error. The present invention has been made based on the aforementioned findings.

A configuration of an OFDM receiving device according to a first embodiment of the present invention is shown in Fig. 1. In the same drawing, the OFDM receiving device according to the present invention has an antenna 1 for capturing an OFDM-modulated signal therein, a receiving means 2, an auto-correlation detecting means 4 for detecting autocorrelation of a signal outputted from the receiving means 2, a delay equalizing means 31 for eliminating a delayed signal component from the output signal of the receiving means 2, based on the result of detection by the auto-correlation detecting means 4 for a predetermined time or more, and an OFDM demodulating means 5.

In the above configuration, the signal received by the antenna 1 is amplified and frequency-converted into a base-band signal, followed by input to the delay equalizing means 31 and the auto-correlation detecting means 4.

Next, the delay equalizing means 31 eliminates the delay signal component from the output signal of the receiving means 2, based on the result of detection by the auto-correlation detecting means 4 for the predetermined time or more, specifically, over a guard interval time of the OFDM modulated signal. A signal outputted from the delay equalizing means 31 is subjected to Fourier transformation in the OFDM demodulating means 5. Thus, a guard interval inserted upon modulation is eliminated therefrom and hence an effective symbol is extracted and demodulated.

A specific configuration of the auto-correlation detecting means 4 shown in Fig. 1 is next shown in Fig. 2. In Fig. 2, the auto-correlation detecting means 4 includes an effective symbol time delaying means 141 for outputting a signal obtained by delaying a signal supplied to the auto-correlation detecting means 4 by an effective symbol time, a complex conjugate signal generating means 142 for generating a complex conjugate signal form the signal supplied to the auto-correlation detecting means 4 and outputting it therefrom, a multiplying means 143 for multiplying the delayed signal by the complex conjugate signal, and an accumulating means 144 for accumulating the result of multiplication by the multiplying means 143 only for a predetermined time.

In the above configuration, the auto-correlation detecting means 4 outputs a signal obtained by delaying a signal supplied to the auto-correlation detecting means through an input terminal 145 by means of the effective symbol time delaying means 141, and generates and outputs a complex conjugate signal from the signal supplied from the input terminal 145 by means of the complex conjugate signal generating means 142. The multiplying means 143 multiplies the delayed signal by the complex conjugate signal. The result of multiplication by the multiplying means 143 is accumulated by the accumulating means 144 for a predetermined time (guard interval time) alone. Further, an auto-correlation value corresponding to the result of accumulation by the accumulating means 144 is outputted to the delay equalizing means 31 through an output terminal 146.

Next, a specific configuration of the delay equalizing means 31 shown in Fig. 1 is shown in Fig. 3. The delay equalizing means 31 is different in configuration from the delay equalizing means 31A (shown in Fig. 23) of the OFDM receiving device already proposed by the present inventors prior to the filing of the present application in that a delay signal level determining means 49 is connected to the output side of a maximum/local maximum auto-correlation searching means 46, switch means 50 and 51 controlled by a control signal C outputted from the delay signal level determining means 49 are respectively connected to the output sides of complex amplitude correcting means 43 and 45, and the complex amplitude correcting means 43 and 45 are respectively connected to the input sides of an adding means 41 through the switch means 50 and 51.

In Fig. 3, the delay equalizing means 31 includes the adding means 41, delay means 42 and 44 for delaying the output of the adding means 41 for a predetermined time, the complex amplitude correcting means 43 and 45 for respectively correcting complex amplitudes of signals outputted from the delay means 42 and 44, a delay time calculating means 47 for calculating delay times developed in the delay means 42 and 44, a complex amplitude coefficient calculating means 48 for calculating complex amplitude coefficients corresponding to amplitude correction amounts of the complex amplitude correcting means 43 and 45, the maximum/local maximum auto-correlation searching means 46 for searching a maximum value and a local maximum value from auto-correlation detection signals supplied thereto, the switch means 50 and 51 respectively provided between the output sides of the complex amplitude correcting means 43 and 45 and the input sides of the adding means 41, and a delay signal level determining means 49 for determining a signal level of a delayed wave and outputting a control signal C for fixing the -side inputs of the adding means to a predetermined value to the switch means 50 and 51 when the level of the delayed wave is low to such an extent as not to cause symbol-to-symbol interference.

Here, the switch means 50 and 51 are normally set as follows in the present embodiment. Namely, their output terminals X will be placed in states of being connected to the input sides A unless the control signal C is inputted from the delay signal level determining means 49. A signal negative feedback means comprising the delay means 42 and the complex amplitude correcting means 43 eliminates one delay signal component, whereas a signal negative feedback means comprising the delay means 44 and the complex amplitude correcting means 45 eliminates another delay signal component.

The operation of the delay equalizing means at the time that the level of the delayed wave inputted to the adding means 41 from the receiving means 2 is low to such an extent as not to cause the symbol-to-symbol interference, i.e., under the condition that no control signal C is outputted from the delay signal level determining means 49 to the switch means 50 and 51, will first be described with reference to Fig. 3.

When the auto-correlation detection signals are supplied to the maximum/local maximum auto-correlation searching means 46 from the auto-correlation detecting means 4, the maximum/local maximum auto-correlation searching means 46 searches a maximum value and a local maximum value for auto-correlation from those signals and transmits control signals related to the maximum value and local maximum value for auto-correlation to the delay time calculating means 47 and the complex amplitude coefficient calculating means 48.

In response to the control signal sent from the maximum/local maximum auto-correlation searching means 46, the delay time calculating means 47 calculates times elapsed up to the time when local maximum auto-correlation values corresponding to two delayed signals to be eliminated were detected from local maximum auto-correlation values other than the maximum auto-correlation value, with the maximum auto-correlation value as the reference, and transmits it to the delay means 42 and 44 as delay times respectively.

When each calculated delay time is now shorter than a predetermined time, specifically, a guard interval time included in an OFDM modulated signal, the delay time to be transmitted is set as zero. In response to the control signal sent from the maximum/local maximum auto-correlation searching means 46, the complex amplitude coefficient calculating means 48 calculates the ratios between the local maximum auto-correlation values corresponding to the two delayed signals to be removed, in the local maximum auto-correlation values other than the maximum auto-correlation value, and the maximum auto-correlation value with the maximum auto-correlation value as the reference, and transmits them to their corresponding complex amplitude correcting means 43 and 45 as complex amplitude coefficients.

Here, the delay time calculating means 47 and the complex amplitude coefficient calculating means 48 calculate delay times and complex amplitude correction coefficients by reference to the auto-correlation detection signals supplied from the auto-correlation detecting means 4.

The delay means 42 and 44 respectively delay the signal inputted thereto, based on the delay times supplied from the delay time calculating means 47. When the supplied delay times are given as zero, the delay times of the delayed signals are less than or equal to the guard interval time of the OFDM modulated signal, and there is no need to eliminate the delayed signals. Therefore, the delay means respectively output signals zero in amplitude without delaying the input signal. The complex amplitude correcting means 43 and 45 perform amplitude corrections, based on the complex amplitude coefficients supplied from the complex amplitude coefficient calculating means 48.

Thus, the output of the adding means 41 is fed back through the feedback means comprising the delay means 42, 44 and the complex amplitude correcting means 43, 45 and supplied to the input of the same adding means 41.

In the configuration shown in Fig. 3, the output signal of the receiving means 2 is supplied to the adding means 41, and the output of the adding means 41 is subjected to delay time and amplitude adjustments by the delay means 42 and 44 and the complex amplitude correcting means 43 and 45, based on the time times and complex amplitude coefficients supplied from the delay time calculating means 47 and the complex amplitude coefficient calculating means 48. The signals subjected to the time delay adjustment and amplitude correction are added together by the adding means 41 in reverse polarity. As a result, the signal components delayed by the guard interval time of the OFDM modulated signal or more, which cause the symbol-to-symbol interference, are removed from the output signal of the receiving means 2. Thus, the signal from which the unnecessary waves have been removed, is outputted to the OFDM demodulating means 5.

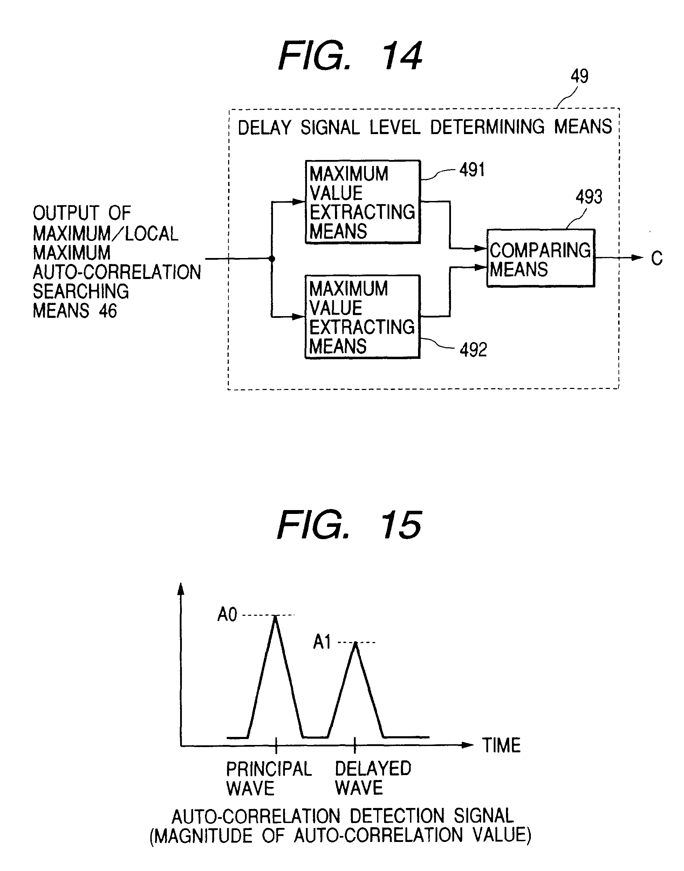

A specific configuration of the delay signal level determining means 49 is shown in Fig. 14 herein. The delay signal level determining means 49 comprises a maximum value extracting means 491 for extracting a maximum value of an auto-correlation value from the output of the maximum/local maximum auto-correlation searching means 46 and outputting it therefrom, a maximum value extracting means 492 for extracting a local maximum value of an auto-correlation value and outputting it therefrom, and a comparing means 493 for making a comparison between the maximum value and local maximum value of the auto-correlation values and outputting a control signal C therefrom.

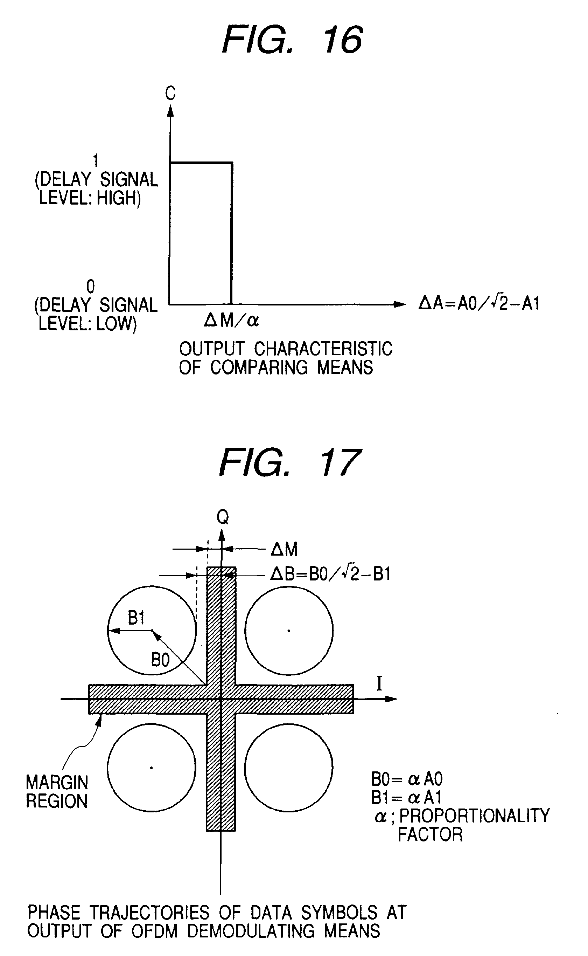

A process up to the output of the control signal C from the delay signal level determining means 49 will next be explained with reference to Figs. 15 through 17. Fig. 15 shows one example of an auto-correlation detection signal outputted from the auto-correlation detecting means 4. Further, Fig. 16 shows the relationship between the difference in level between the auto-correlation values compared by the comparing means 493 and the control signal C obtained therefrom. Fig. 17 shows the relationship between margin levels and OFDM demodulated symbols used in Fig. 16. Incidentally, a description will be made even here on condition that the number of delayed waves is one and QPSK is used for information modulation.

The auto-correlation detection signal shown in Fig. 15 is inputted to the maximum/local maximum auto-correlation searching means 46. The maximum/local maximum auto-correlation searching means 46 searches a maximum value (the level of a principal wave in this case) and a local maximum value (the level of a delayed wave in the same case) of the auto-correlation value and outputs them as A0 and A1 respectively. The maximum/local maximum auto-correlation searching means 46 also outputs a delay time developed between the principal wave and the delayed wave in conjunction therewith. Incidentally, if the delay time is less than or equal to a guard interval time, then the delay time is set as zero and A1 is not outputted. In response to a signal outputted from the maximum/local maximum auto-correlation searching means 46, the maximum value extracting means 491 in the delay signal level determining means 49 first extracts A0 and the local maximum value extracting means 492 provided therein extracts A1.

The comparing means 493 takes in A0 and A1 and calculates the difference in level therebetween $\Delta A = A0/\sqrt{2}-A1$. Further, the comparing means 493 compares $\Delta A$ and a predetermined margin level: (M/$\alpha$ (where $\alpha$: proportionality factor)) according to Fig. 16. When $\Delta A < \Delta M/\alpha$ here, an interference allowance amount between adjacent QPSK symbols $\Delta B = B0/\sqrt{2}-B1$ becomes smaller than the predetermined margin $\Delta M$ in the case of the demodulated symbols shown in Fig. 17. Namely, since the principal wave and the delayed wave are identical in level or the level of the delayed wave is slightly large, the interference of each demodulated symbol or the potential for its interference is indicated by the output of the OFDM demodulating means 5. At this time, "1" indicating that the level of the delayed wave is high, is outputted as the control signal C.

When $\Delta A > \Delta M/\alpha$ in reverse, the interference allowance amount between the adjacent QPSK symbols $\Delta B$ is larger than the margin $\Delta M$ in the case of the demodulated symbols shown in Fig. 17. Namely, since the level of the delay wave is lower than the level of the principal wave, non-interference of each demodulated symbol is indicated by the output of the OFDM demodulating means 5. At this time, "0" indicating that the level of the delayed wave is low, is outputted as the control signal C. Here, $\Delta M$ is a margin for avoiding the occurrence of interference by each demodulated symbol, at the output of the OFDM demodulating means 5 and is a known value, as shown in Fig 17.

When the control signal C is outputted in this way, the switch means 50 and 51 are operated as follows: When delayed waves are large in level, signals at input terminals A are outputted to their corresponding output terminals X by reference to the control signal C. When the delayed waves are small in level in reverse, signals at input terminals B are outputted to their corresponding output terminals X. Namely, when the delayed waves are high in level and symbol interference takes place, the outputs of the feedback means corresponding to the two systems in the delay equalizing means 31 are outputted to the adding means 41, whereby the operation of delay equalization is executed in a manner similar to the OFDM receiving device proposed by the present inventors prior to the filling of the present application.

On the other hand, when the level of each delayed wave is low and no symbol interference occurs, signals each having a zero level are outputted to the adding means 41. Consequently, the input signal of the delay equalizing means 31 is bypassed to the output side and hence the delay equalizing operation is not executed. Since, in the present embodiment, the two inputs of the adding means 41 are fixed to zero and remain unchanged when the level of each delayed wave is low, the power consumed by the adding means 41 is reduced correspondingly.

According to the OFDM receiving device according to the first embodiment of the present invention as described above, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. Since the delay equalizing means stops a delay equalizing operation according to the level of the delayed signal component, an OFDM receiving device, which performs the delay equalization of the OFDM modulated signals at a stage preceding OFDM demodulation, is obtained which is capable of achieving low power consumption of the delay equalizing means.

Namely, in the present embodiment, when the level of each delayed signal is low and no symbol interference takes place, the delay signal level determining means 49 outputs the control signal C to the switch means 50 and 51, and the - side inputs of the adding means 41 are fixed to zero. Therefore, the adding means 41 is brought to a state equivalent to the substantial non-execution of its adding operation, whereby the adding means 41 can be reduced in power consumption.

An OFDM receiving device according to a second embodiment of the present invention will next be explained. The OFDM receiving device according to the present embodiment is identical in overall configuration to one shown in Fig. 1 except for a specific configuration of a delay equalizing means, and the description of certain common elements will therefore be omitted. Since third through eighth embodiments to be described later are also similarly identical to one shown in Fig. 1 except for specific configurations of delay equalizing means, only the delay equalizing means will be explained even in the case of these embodiments.

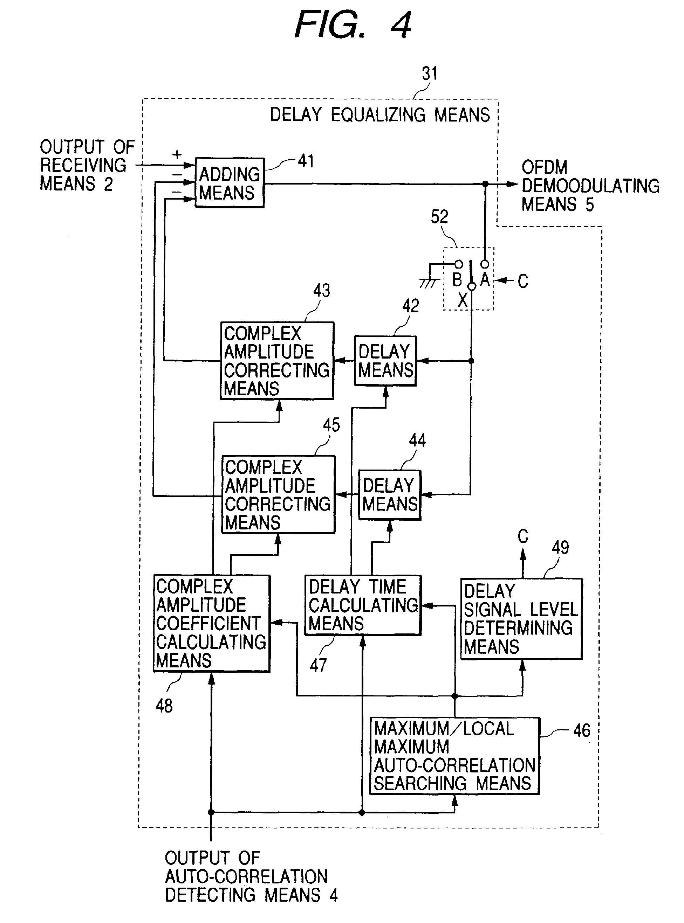

A configuration of the delay equalizing means employed in the OFDM receiving device according to the present embodiment is shown in Fig. 4. The delay equalizing means employed in the OFDM receiving device according to the present embodiment is different in configuration from the delay equalizing means (shown in Fig. 3) employed in the OFDM receiving device according to the first embodiment in that the switch means connected to the output sides of the complex amplitude correcting means 43 and 45 are eliminated, and a switch means 52 is newly connected between the output side of an adding means 41 and the input sides of delay means 42 and 44. Since the present delay equalizing means is similar in other configurations thereto, the same elements are identified by the same reference numerals and the description of certain common elements will therefore be omitted.

The delay equalizing means 32 employed in the OFDM receiving device according to the present embodiment has an adding means 41, delay means 42 and 44 for delaying the output of the adding means 41 for a predetermined time, complex amplitude correcting means 43 and 45 for respectively correcting complex amplitudes of signals outputted from the delay means 42 and 44, a delay time calculating means 47 for calculating delay times for the delay means 42 and 44, a complex amplitude coefficient calculating means 48 for calculating complex amplitude coefficients corresponding to amplitude correction amounts for the complex amplitude correcting means 43 and 45, a maximum/local maximum auto-correlation searching means 46 for searching a maximum value and a local maximum value from each auto-correlation detection signal supplied thereto, a switch means 52 connected between the output side of the adding means 41 and the input sides of the delay means 42 and 44, and a delay signal level determining means 49 for determining a signal level of each delayed wave and outputting a control signal C to the switch means 52 when the level of the delayed wave is low to such an extent as not to cause symbol-to-symbol interference.

The switch means 52 will now be explained. When the control signal C is in a state of being not inputted from the delay signal level determining means 49, i.e., under the condition that the level of the delayed wave is high and symbol interference takes place, an input terminal A and an output terminal X are connected to each other. When the control signal C is inputted, i. e., under the condition that the level of the delayed wave is low and no symbol interference takes place, an input terminal B and the output terminal X are connected to each other and hence signals inputted to the delay means are switched so as to be fixed to a zero level.

In the above configuration, when the delay signal level determining means 49 determines, based on the output signal of the maximum/local maximum auto-correlation searching means 46, that the level of each delayed wave is low and no symbol interference occurs, the delay signal level determining means 49 output a control signal C to the switch means 52. As a result, the input terminal B and the output terminal X are connected to each other in the switch means 52, whereby the input signals of the delay means are changed so as to be fixed to the zero level. Thus, the zero level signals are respectively outputted to the delay means 42 and 44.

Since the outputs of two-system feedback means eventually reach zero, the input signal of the delay equalizing means 32 is bypassed to the output, so that a delay equalizing operation is not executed.

Since the signals remain unchanged in the delay means 42 and 44 and afterward when the level of each delayed wave is low in the present embodiment, the delay means 42 and 44, complex amplitude correcting means 41 and 45 and adding means 41 are reduced in power consumption.

According to the OFDM receiving device according to the second embodiment of the present invention, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. When the level of each delay signal component is judged to be smaller than the level of a main signal component, the control means controls the output of each feedback means to zero. Therefore, the delay equalizing means brings about an effect in that a change in signal is less reduced in a subsequent circuit in which a feedback signal is brought to zero, and power consumption is reduced correspondingly.

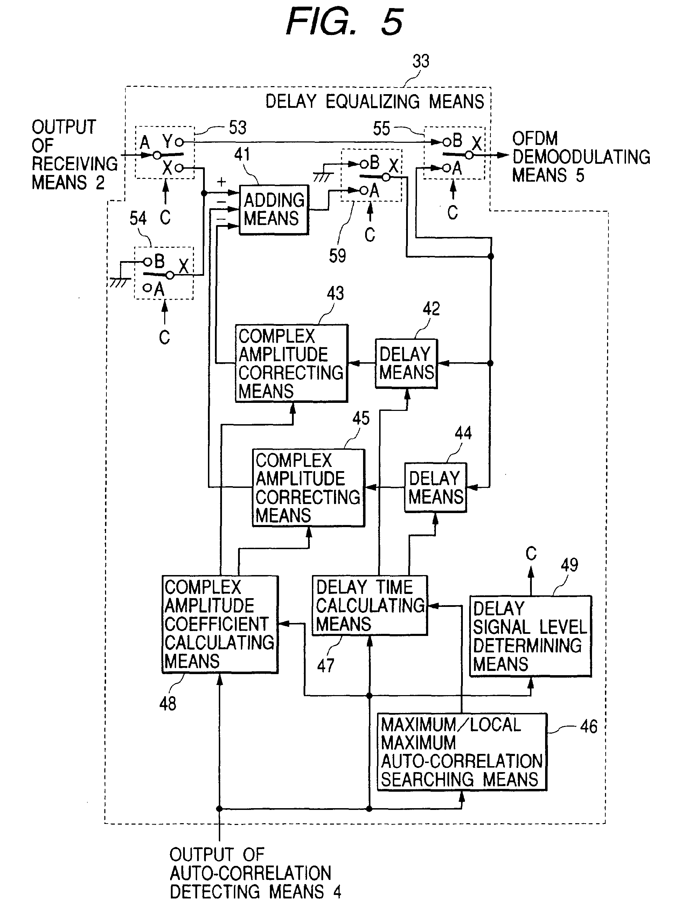

A specific configuration of a delay equalizing means employed in an OFDM receiving device according to a third embodiment of the present invention is next shown in Figs 5. The delay equalizing means employed in the OFDM receiving device according to the present embodiment is different in configuration from the delay equalizing means employed in the OFDM receiving device according to first embodiment shown in Fig. 3 in that the switch means connected to the output sides of the complex amplitude correcting means 43 and 45 are eliminated, switch means 53 and 54 are newly connected to the OFDM modulated signal input terminal of the adding means 41, and switch means 55 and 59 are further connected to the output side of the adding means 41. Here, the switch means 53, 54, 55 and 59 are controlled so as to be switched according to a control signal C outputted from a delay signal level determining means 49. The switch means 53 and 55 are respectively switch means for performing switching to either the output of an output signal of a receiving means 2 to an OFDM demodulating means 5 through the delay equalizing means or the bypassing of the delay equalizing means 33. Further, the switch means 54 is a switch means for fixing the level of an input signal on the + side of the adding means 41 to a zero level upon the above bypassing. The switch means 59 is a switch means for fixing the level of a signal outputted from the adding means 41 to zero.

When the level of each delayed wave is high and symbol interference takes place in the above configuration, no control signal C is outputted from the delay signal level determining means 49 to each of the switch means 53 through 55 and 59, and A to X terminals are respectively connected to one another in the switch means 53 through 55 and 59. As a result, the delay equalizing means 33 executes a delay equalizing operation in a manner similar to the OFDM receiving device proposed by the present inventors through another application prior to the filling of the present application.

On the other hand, when the level of the delayed wave is low and no symbol interference takes place, the control signal C is outputted from the delay signal level determining means 49 to each individual switch means 53 through 55 and 59, and the A to Y terminals are connected to each other in the switch means 53. Further, the B to X terminals are respectively connected to one another in the switch means 54, 55 and 59. Thus, since the input signal of the delay equalizing means 33 is bypassed to the output, no delay equalizing operation is executed.

In the present embodiment, the zero signal is inputted via the switch means 54 to the + side input terminal of the adding means 41 to which an OFDM modulated signal is inputted, and the output of the adding means 41 is outputted so as to reach zero through the switch means 59. Therefore, the signals at delay means 42 and 44 and complex amplitude correcting means 43 and 45 subsequent to the switch means 59 are also brought to zero and hence no change in signal occurs. Eventually, the delay means 42 and 44, the complex amplitude correcting means 43, 45 and the adding means 41 are reduced in power consumption.

According to the OFDM receiving device according to the third embodiment of the present invention, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. When the delay signal level determining means determines that the level of each delay signal component is lower than the level of a main signal component, the control means bypasses the input signal of the delay equalizing means to the output side. Therefore, the delay equalizing means brings about an effect in that the operation of the delay equalizing means is brought to a halt condition, and a change in signal is less reduced in each feedback means because no signal is inputted to the feedback means, whereby power consumption is reduced correspondingly.

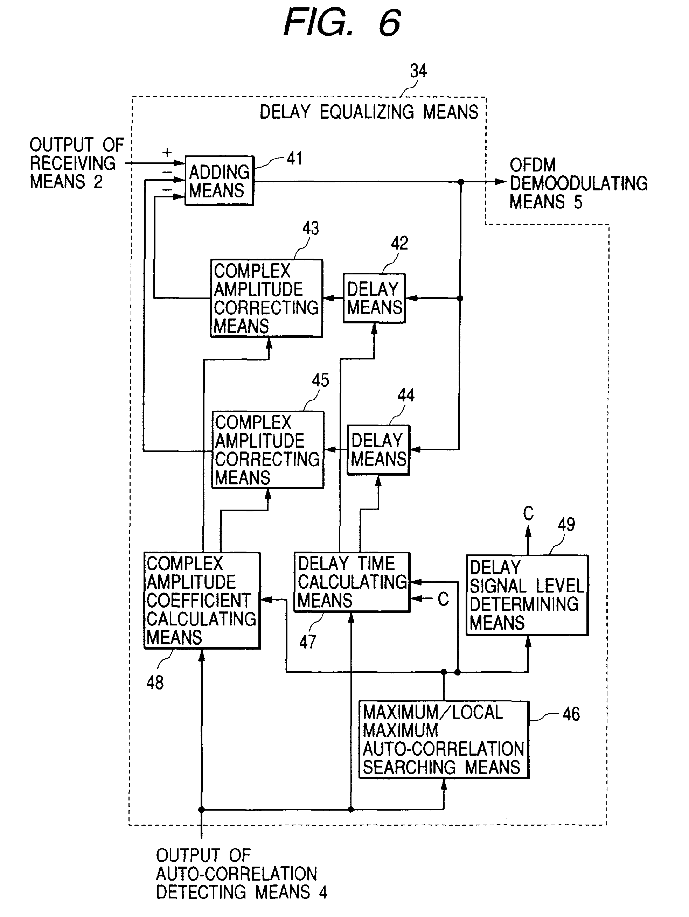

A specific configuration of a delay equalizing means 34 employed in an OFDM receiving device according to a fourth embodiment of the present invention is next shown in Fig. 6. The delay equalizing means 34 employed in the OFDM receiving device according to the present embodiment is different in configuration from the delay equalizing means 31 employed in the OFDM receiving device according to the first embodiment shown in Fig. 3 in that a delay time calculating means is controlled based on a control signal C outputted from a delay signal level determining means 49 without providing the switch means 50 and 51. The present delay equalizing means 34 is identical in other configurations thereto.

When the level of each delayed wave is high and symbol interference occurs in the above configuration, no control signal C is outputted from the delay signal level determining means 49 to the delay time calculating means 47, and a delay equalizing operation is executed by the delay equalizing means 34.

On the other hand, when the level of the delayed wave is low and no symbol interference takes place, the control signal C is outputted from the delay signal level determining means 49 to the delay time calculating means 47. In response to the control signal C, the delay time calculating means 47 sets delay times for delay means 42 and 44 to zero. At this time, the delay means 42 and 44 respectively output a zero signal to complex amplitude correcting means 43 and 45. As a result, since zero is set to input terminals for feedback means, of an adding means 41, no delay equalization is executed.

Since the signals in the circuits subsequent to the delay means 42 and 44 remain unchanged in the present embodiment, the complex amplitude correcting means 41 and 45 and the adding means 41 are reduced in power consumption.

According to the OFDM receiving device according to the fourth embodiment of the present invention, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. When the level of each delay signal component is judged to be lower than the level of a main signal component, the control means controls the output of each feedback means to zero. Therefore, the delay equalizing means brings about an effect in that a change in signal is less reduced in a subsequent circuit in which a feedback signal is brought to zero, and power consumption is reduced correspondingly.

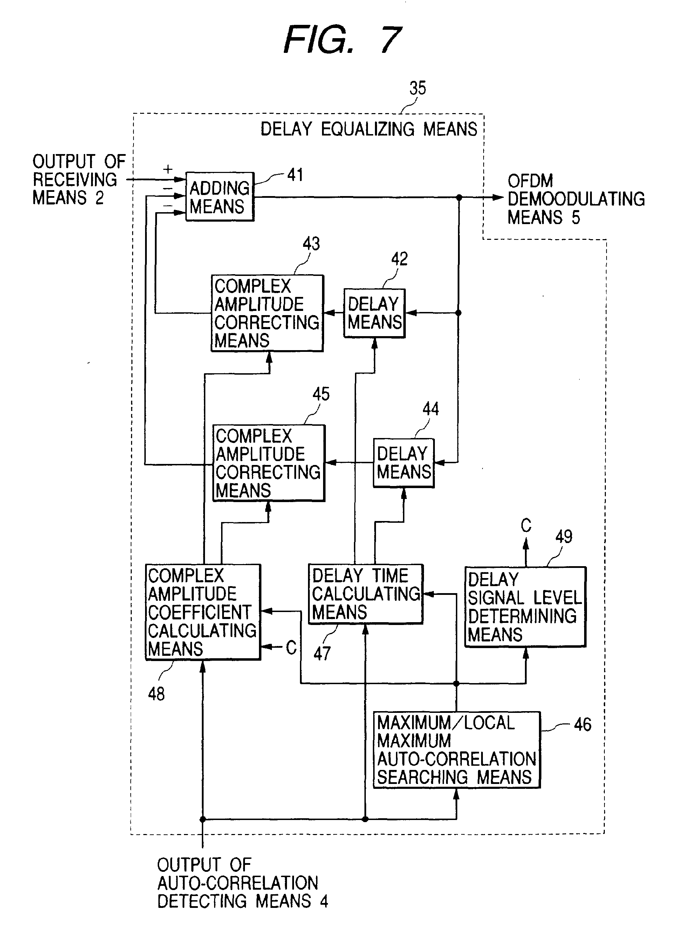

A specific configuration of a delay equalizing means 35 employed in an OFDM receiving device according to a fifth embodiment of the present invention is next shown in Fig. 7. The delay equalizing means 35 employed in the OFDM receiving device according to the present embodiment is different in configuration from the delay equalizing means 34 employed in the OFDM receiving device according to the fourth embodiment shown in Fig. 6 in that a complex amplitude coefficient calculating means 48 other than the delay time calculating means 47 is controlled based on a control signal C outputted from a delay signal level determining means 49. The present delay equalizing means 35 is identical in other configurations thereto.

When the level of each delayed wave is high and symbol interference occurs in the above configuration, no control signal C is outputted from the delay signal level determining means 49 to the complex amplitude coefficient calculating means 48, and a delay equalizing operation is executed by the delay equalizing means 35.

On the other hand, when the level of the delayed wave is low and no symbol interference takes place, the control signal C is outputted from the delay signal level determining means 49 to the complex amplitude coefficient calculating means 48. In response to the control signal C, the complex amplitude coefficient calculating means 48 sets amplitude coefficients for complex amplitude correcting means 43 and 45 to zero. Since, at this time, the complex amplitude correcting means 43 and 45 respectively output a zero signal to input terminals for feedback means, of an adding means 41, no delay equalization is executed.

Since the signals at the input terminals for the feedback means, of the adding means 41 remain unchanged in the present embodiment, the adding means 41 is reduced in power consumption.

According to the OFDM receiving device according to the fifth embodiment of the present invention, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. When the level of each delay signal component is judged to be lower than the level of a main signal component, the control means controls the output of each feedback means to zero. Therefore, the delay equalizing means brings about an effect in that a change in signal is less reduced in a subsequent circuit in which a feedback signal is brought to zero, and power consumption is reduced correspondingly.

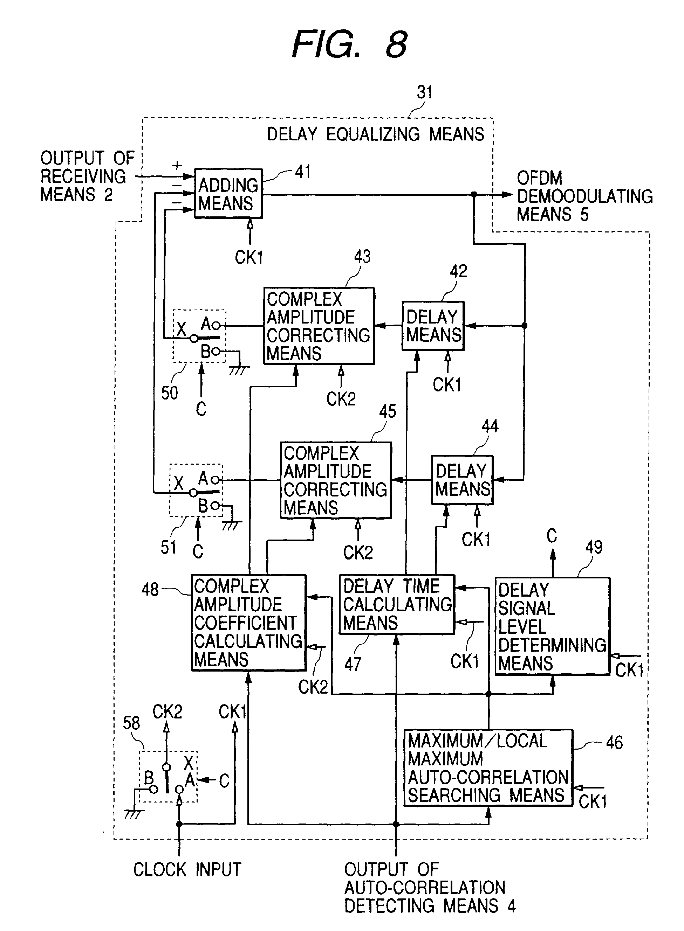

A specific configuration of a delay equalizing means 36 employed in an OFDM receiving device according to a sixth embodiment of the present invention is next shown in Fig. 8. The delay equalizing means 36 employed in the OFDM receiving device according to the present embodiment is a modification of the delay equalizing means 31 employed in the OFDM receiving device according to the first embodiment shown in Fig. 3 and is different therefrom in that a switch means 58, which performs switching between the supply and stop of a clock, based on a control signal C outputted from a delay signal level determining means 49, is newly provided. The present delay equalizing means 36 is identical in other configurations to the delay equalizing means 31.

Incidentally, since all the circuits are operated based on one common clock in Fig. 3, the clock and its input/output terminals are not illustrated in the drawing. However, Fig. 8 shows the flow of clocks by open arrows to define the operation of the switch means 58 and also demonstrates clock input/output terminals for various means.

Here, a clock CK1 is an input clock signal always supplied to each individual circuit portions. A clock CK2 is a signal controlled so as to be switched to an input clock and a fixed level (e.g., zero level) according to the control signal C outputted from the delay signal level determining means 49. In the present embodiment, the clock CK2 is supplied to clock input terminals of complex amplitude correcting means 43 and 45 and a complex amplitude coefficient calculating means 48, whereas the clock CK1 is supplied to various means other than those.

When the level of each delayed wave is high and symbol interference is produced in the above configuration, no control signal is outputted from the delay signal level determining means 49 to each switch means. Therefore, A to X terminals of the switch means 50 and 51 are respectively connected to one another, and the outputs of the complex amplitude correcting means 43 and 45 are respectively supplied to their corresponding two negative feedback input terminals of an adding means 41.

Further, A to X terminals of the switch means 58 are also connected to each other so that the input clock is supplied as the clock CK2. If they are connected in this way, then the delay equalizing means 36 performs a delay equalizing operation in a manner similar to the delay equalizing means 31 employed in the OFDM receiving device according to the first embodiment.

On the other hand, when the level of each delay wave is low and no symbol interference takes place, the control signal C is outputted from the delay signal level determining means 49 to each switch means. Thus, B to X terminals of the switch means 50 and 51 are respectively connected to one another in a manner similar to the delay equalizing means 31 (Fig. 3), and two-system input terminals for feedback means, of the adding means 41 are both fixed to a zero level. In the present embodiment as well, B to X terminals of the switch means 58 are also connected to each other so that the clock CK2 is defined as a zero level signal. Thus, the supply of the clocks to the complex amplitude correcting means 43 and 45 and the complex amplitude coefficient calculating means 48 is stopped.

As a result, no delay equalization is carried out in a manner similar to the delay equalizing means 31 (Fig. 3). Thus, a reduction in power consumption can be achieved by the amount equivalent to the stop of the operations of the complex amplitude correcting means 43 and 45 and the complex amplitude coefficient calculating means 48.

According to the OFDM receiving device according to the sixth embodiment of the present invention, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. The delay equalizing means brings about an effect in that since the control means stops the operation of each feedback means referred to above when the delay signal level determining means determines that the level of each delay signal component is lower than the level of a main signal component, a change in signal at each feedback means is eliminated and hence power consumption is further reduced.

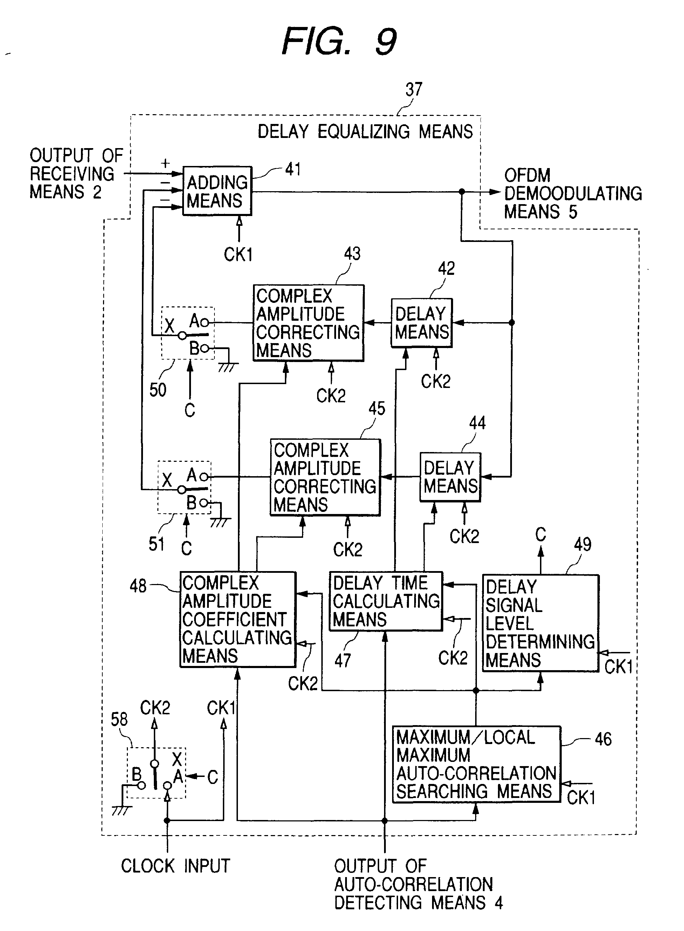

A specific configuration of a delay equalizing means 37 employed in an OFDM receiving device according to a seventh embodiment of the present invention is next shown in Fig. 9. The delay equalizing means 37 employed in the OFDM receiving device according to the present embodiment is different in configuration from the delay equalizing means 36 (Fig. 8) employed in the OFDM receiving device according to the sixth embodiment in that CK2 is supplied even to respective clock input terminals of delay means 42 and 44 and a delay time calculating means 47. The present delay equalizing means 37 is identical in other configurations thereto.

When the level of the delayed signal is low and no symbol interference occurs in the above configuration, the delay equalizing means 37 is similar in operation to the delay equalizing means 36 (Fig. 8), and the delay means 42 and 44 and the delay time calculating means 47 stop operating respectively.

As a result, the delay equalization is not executed in a manner similar to the delay equalizing means 36 (Fig. 8) according to the sixth embodiment. In the present embodiment, the effect of reducing power consumption is further improved as compared with the sixth embodiment by the amount equivalent to the stop of the operations of the delay means 42 and 44 and the delay time calculating means 47.

According to the OFDM receiving device according to the seventh embodiment of the present invention, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. The delay equalizing means brings about an effect in that since the control means stops the operation of each feedback means referred to above when the delay signal level determining means determines that the level of each delay signal component is lower than the level of a main signal component, a change in signal at each feedback means is eliminated and hence power consumption is further reduced.

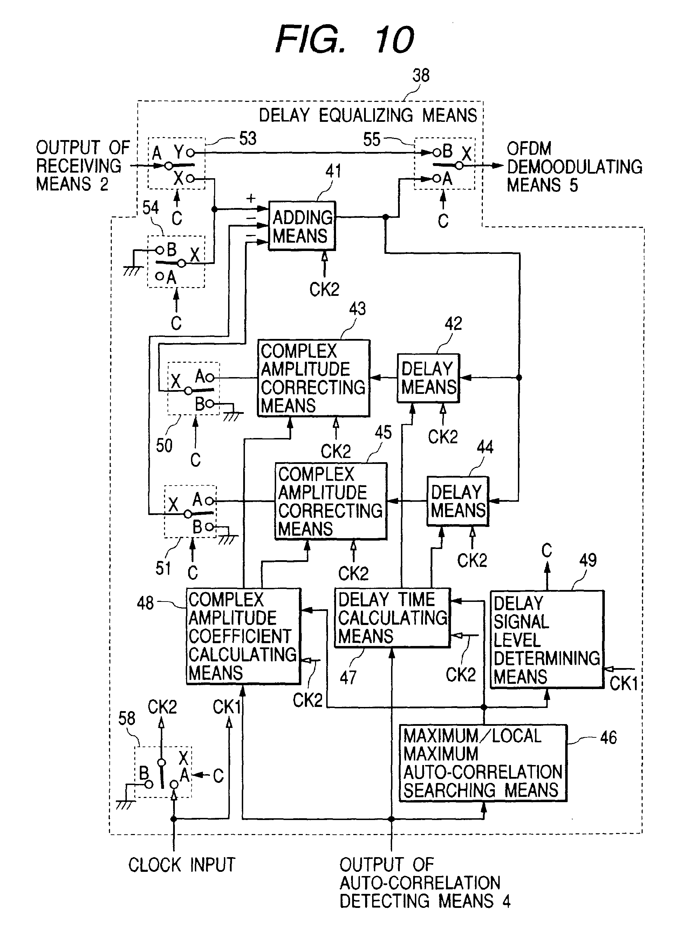

A specific configuration of a delay equalizing means 38 employed in an OFDM receiving device according to an eighth embodiment of the present invention is next shown in Fig. 10. The delay equalizing means 38 employed in the OFDM receiving device according to the present embodiment is a modification of each of the delay equalizing means 31 (Fig. 1) and 33 (Fig. 5) employed in the OFDM receiving devices according to the first and third embodiments. The present equalizing means 38 is newly provided with a switch means 58 for performing switching between the supply and stop of a clock and omits the switch means 59 therefrom. Further, a clock CK2 corresponding to a signal switched to an input clock and a fixed level (zero level in the present embodiment) according to the level of a delayed signal is supplied to respective clock input terminals of an adding means 41, delay means 42 and 44, a delay time calculating means 47, complex amplitude correcting means 43 and 45 and a complex amplitude coefficient calculating means 48. A clock CK1 supplied at all times is supplied to clock input terminals of a maximum/local maximum auto-correlation searching means 46 and a delay signal level determining means 49 other than those referred to above.

When the level of the delayed wave is low and no symbol interference takes place in the above configuration, a control signal C is outputted from the delay signal level determining means 49 to each individual switch means 50, 51, 53 through 55 and 58, and A to Y terminals are connected to each other in the switch means 53. Further, B to X terminals are respectively connected to one another in the switch means 54 and 55. Thus, since the input signal of the delay equalizing means 38 is bypassed to the output, no delay equalizing operation is executed.

Further, B to X terminals are connected to each other in the switch means 58, so that the clock CK2 is fixed to a zero level. Thus, since the supply of the clocks to the adding means 41, delay means 42 and 44, delay time calculating means 47, complex amplitude correcting means 43 and 45, and complex amplitude coefficient calculating means 48 is stopped, power consumption is reduced correspondingly.

Incidentally, the effect of reducing power used up or consumed by the delay equalizing means of the OFDM receiving device according to the present embodiment is the highest as compared with other embodiments.

According to the OFDM receiving device according to the eighth embodiment of the present invention, it has an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. The delay equalizing means brings about an effect in that since the operation of each feedback means referred to above is stopped when the delay signal level determining means determines that the level of each delay signal component is lower than the level of a main signal component, a change in signal at each feedback means is eliminated and hence power consumption is further reduced.

A ninth embodiment of the present invention will next be described in detail with reference to the drawings. An OFDM receiving device according to the embodiment of the present invention is provided with a delay equalizing means for eliminating each signal component (delayed wave) delayed over a predetermined time from each received OFDM modulated signal, a power detecting means for detecting the power of each of the input and output signals of the delay equalizing means, a comparing means for making a comparison between the magnitudes of both the power of the input signal of the delay equalizing means and that of the output signal thereof, and a delay time correcting means provided in the delay equalizing means, for correcting a delay time of an output signal of the delay equalizing means, based on the result of comparison by the power comparing means, all of which are provided at a stage preceding an FFT computing means for effecting an FFT operation on each effective symbol of an OFDM modulated signal, i.e., prior to an OFDM demodulating means, whereby each delayed time set by the delay equalizing means is corrected even if a false correlation peak value exists in an auto-correlation signal, thus making it possible to perform stable delay equalization and reduce a bit error subsequent to the OFDM demodulation.

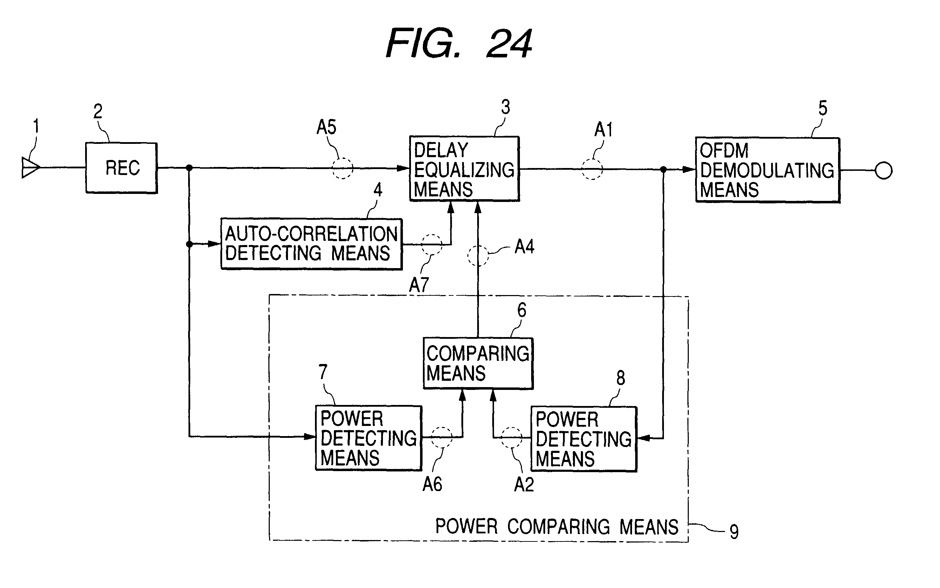

Fig. 24 shows an OFDM receiving device according to an embodiment of the present invention. In the same drawing, the OFDM receiving device has an antenna 1 for capturing an OFDM-modulated signal therein, a receiving means 2, an auto-correlation detecting means 4 for detecting auto-correlation of a signal outputted from the receiving means 2, a delay equalizing means 3 for eliminating each signal component delayed over a predetermined time from the output signal of the receiving means 2, a power detecting means 7 for detecting the power of the input signal of the delay equalizing means 3, a power detecting means 8 for detecting the power of the output signal of the delay equalizing means 3, a comparing means 6 for comparing the magnitudes of outputs produced from the power detecting means 7 and 8, and an OFDM demodulating means 5. Here, the power comparing means 9 comprises the comparing means 6 and the power detecting means 7 and 8.

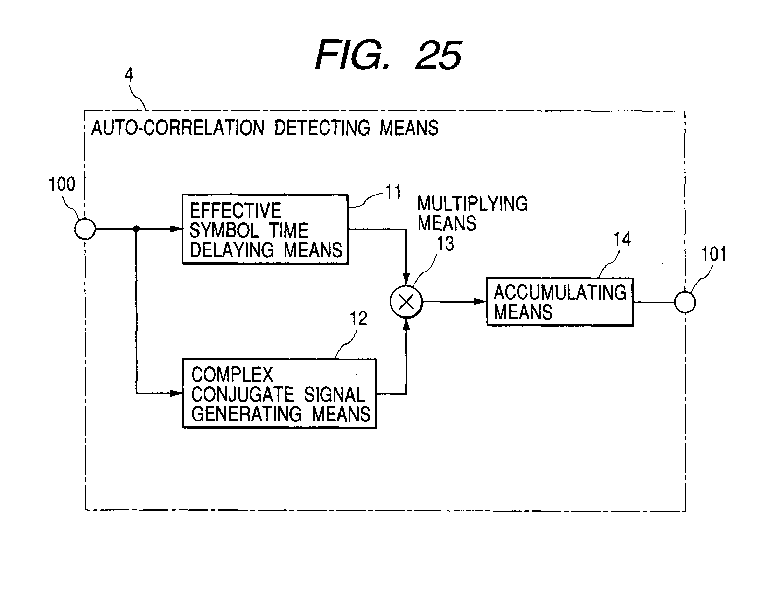

A specific configuration of the auto-correlation detecting means 4 shown in Fig. 24 is next shown in Fig. 25. In Fig. 25, the auto-correlation detecting means 4 has an effective symbol time delaying means 11 for receiving a signal supplied from the receiving means 2 at an input terminal 100 and outputting a signal delayed by an effective symbol time, a complex conjugate signal generating means 12 for generating a complex conjugate signal from the signal supplied from the receiving means 2, a multiplying means 13 for multiplying the delayed signal by the complex conjugate signal, and an accumulating means 14 for accumulating the result of multiplication by the multiplying means 13 for a predetermined time alone. The auto-correlation detecting means 4 outputs the result thereof from an output terminal 101.

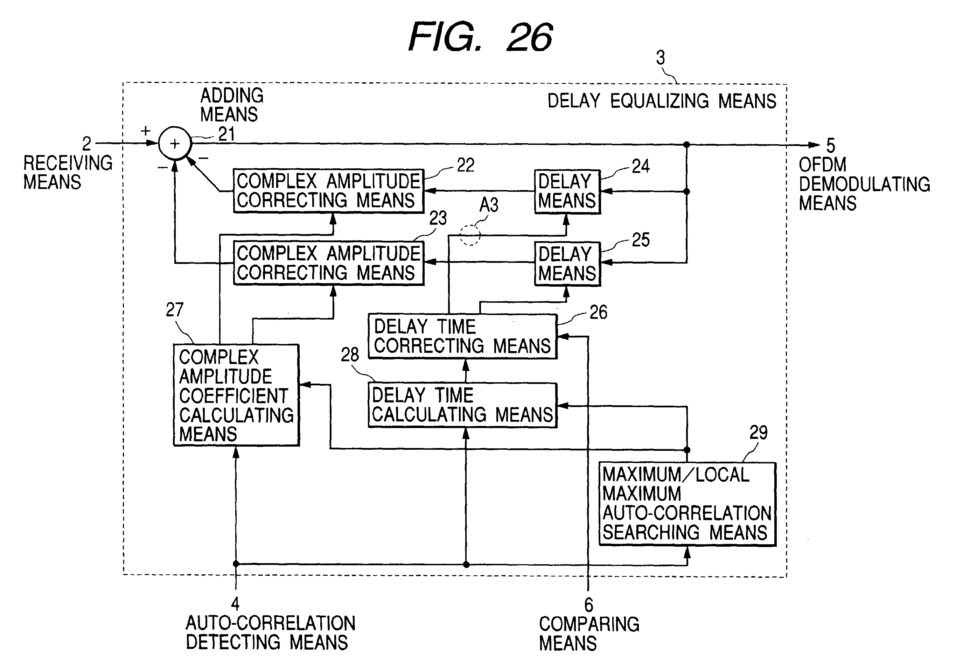

A specific configuration of the delay equalizing means 3 shown in Fig. 24 is next shown in Fig. 26. In Fig. 26, the delay equalizing means 3 has an adding means 21, delay means 24 and 25 for respectively delaying the output of the adding means 21 for a predetermined time, complex amplitude correcting means 22 and 23 for respectively correcting complex amplitudes of signals outputted from the delay means 24 and 25, a complex amplitude coefficient calculating means 27 for calculating complex amplitude coefficients corresponding to amplitude correction amounts for the complex amplitude correcting means 22 and 23, a delay time calculating means 28 for calculating a delay time, based on the result of detection by the auto-correlation detecting means 4 and the output result of a maximum/local maximum auto-correlation searching means, a delay time correcting means 26 for correcting the result of calculation by the delay time calculating means 28 in response to the result of detection by the comparing means 6, and the maximum/local maximum auto-correlation searching means 29 for searching a maximum value and a local maximum value from auto-correlation values supplied thereto.

The delay equalizing means 3 shown in Fig. 26 has a configuration for effecting delay equalization on two signals alone. A signal feedback means comprised of the delay means 24 and the complex amplitude correcting means 22 eliminates one delayed signal, whereas a signal feedback means comprised of the delay means 25 and the complex amplitude correcting means 23 removes another delayed signal.

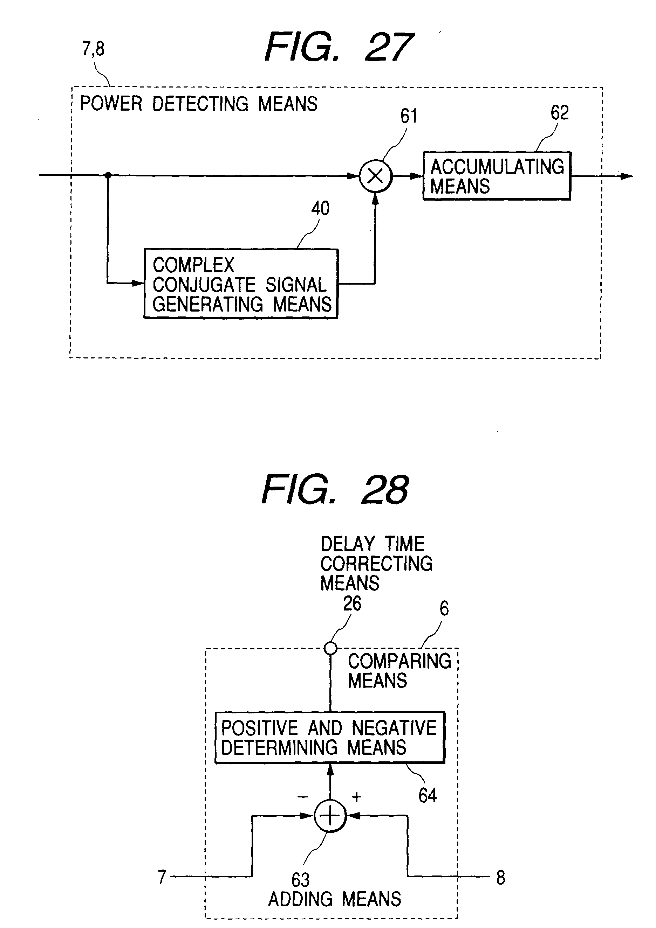

A configuration of the power comparing means 9 shown in Fig. 24 will next be described with reference to Figs. 27 and 28. Either of the power detecting means 7 and 8 in the power comparing means 9 has a complex conjugate signal generating means 40 for generating a complex conjugate signal of an input signal, a multiplying means 61 for multiplying the output signal of the complex conjugate signal generating means 40 by the input signal, and an accumulating means 62 for accumulating the output of the multiplying means 61 by a predetermined number, as shown in Fig. 27.

As shown in Fig. 28, the comparing means 6 in the power comparing means 9 has an adding means 63 for adding the outputs of the power detecting means 7 and 8, and a positive and negative determining means 64 for determining whether the output of the adding means 63 falls within either of positive and negative ranges.

The operation of the OFDM receiving device according to the present embodiment, which is based on such a configuration as described above, will be explained. In Fig. 24, the signal received by the antenna 1 is first amplified and frequency-converted by the receiving means 2. Further, the so-processed signal is converted to a digital base-band signal by an A/D converting means (not shown). The base-band signal is inputted to the delay equalizing means 3, the auto-correlation detecting means 4 and the power detecting means 7.

In response to the base-band signal sent from the receiving means 2, the effective symbol time delaying means 11 in the auto-correlation detecting means 4 outputs a signal obtained by delaying a signal supplied from the input terminal 100 to the auto-correlation detecting means by an effective symbol time. Further, the complex conjugate signal generating means 12 in the auto-correlation detecting means 4 generates and outputs a complex conjugate signal from the signal supplied from the input terminal 100. The delayed signal is multiplied by the complex conjugate signal and the result of multiplication by the multiplying means 13 is accumulated by the accumulating means 14 for a predetermined time alone. The result of accumulation by the multiplying means 14 is an auto-correlation signal and is outputted to the delay equalizing means 3 through the output terminal 101.

Further, the power detecting means 7 receives the base-band signal sent from the receiving means 2 therein. The base-band signal is inputted to the power detecting means 7. The multiplying means 61 multiplies a complex conjugate signal of the input signal, which is generated by the complex conjugate signal generating means 40, by the input signal to thereby calculate instantaneous signal power with one sample of the base-band signal converted by the A/D converting means (not shown) in the receiving means 2 as the unit. Further, the accumulating means 62 accumulates the instantaneous signal power by a predetermined number to thereby calculate accumulated instantaneous signal power. The calculated accumulated instantaneous signal power is outputted to one input terminal of the comparing means 6 as input power.

On the other hand, the power detecting means 8 receives therein a signal outputted from the delay equalizing means 3 and calculates signal power in a manner similar to the power detecting means 7. The power detecting means 8 outputs it to the other input terminal of the comparing means 6 as output power for the delay equalizing means 3.

The comparing means 6 receives the input power and output power of the delay equalizing means 3 from the power detecting means 7 and 8 respectively to thereby cause the adding means 63 to calculate the difference between the two. Namely, the adding means 63 adds the input power of the delay equalizing means 3 as a negative polarity and adds an output signal power value as a positive polarity. The adding means 63 sends the result of calculation to the positive and negative determining means 64 as an input/output power difference.

When the output power (corresponding to the signal power detected by the power detecting means 8) for the delay equalizing means 3 is larger than the input power (corresponding to the signal power detected by the power detecting means 7), the positive and negative determining means 64 transmits +1 to the delay equalizing means 3. When they are set in reverse, the positive and negative determining means 64 sends -1 to the delay equalizing means 3.

Next, the delay equalizing means 3 eliminates a signal component delayed over a guard interval time of the OFDM modulated signal, based on the result of detection by the auto-correlation detecting means 4 and the result of comparison by the power comparing means 9. A signal outputted from the delay equalizing means 3 is subjected to Fourier transformation by the OFDM demodulating means 5 to remove a guard interval inserted upon modulation, whereby an effective symbol is extracted and demodulated.

The configuration of the delay equalizing means 3 will be explained in detail. When auto-correlation values are first supplied from the auto-correlation detecting means 4 to the maximum/local maximum auto-correlation searching means 29, the maximum/local maximum auto-correlation searching means 29 sends a control signal related to the maximum value of the auto-correlation selected from within those auto-correlation values to the complex amplitude coefficient calculating means 27 and the delay time calculating means 28. When three OFDM modulated signals are included in the output of the receiving means 2, for example, one maximum auto-correlation value and two local maximum auto-correlation values are detected. Control information about these are sent out to remove a delayed signal which has led up to the occurrence of the local maximum auto-correlation values.

In response to the control signal sent from the maximum/local maximum auto-correlation searching means 29, the delay time calculating means 28 next calculates a time having elapsed up to the detection of local maximum auto-correlation values corresponding to two delayed signals to be removed, in the local maximum auto-correlation values other than the maximum auto-correlation value with the maximum auto-correlation value as the reference. When the calculated delay time is shorter than a predetermined time, specifically, a guard interval time included in each OFDM modulated signal here, the delay time to be sent will be set as zero.

In response to the control signal supplied from the maximum/local maximum auto-correlation searching means 29, the complex amplitude coefficient calculating means 27 calculates the ratios of the maximum auto-correlation value to the local maximum auto-correlation values corresponding to the two delayed signals to be removed in the local maximum auto-correlation values other than the maximum auto-correlation value with the maximum auto-correlation value as the reference, and transmits them to the complex amplitude correcting means 22 and 23 as complex amplitude coefficients respectively.

Here, the delay time calculating means 28 and the complex amplitude coefficient calculating means 27 calculate the delay time and the complex amplitude coefficients by reference to the auto-correlation values.

In response to the result of comparison by the power comparing means 9, the delay time correcting means 26 corrects the delay time when it is +1 (when the output power of the delay equalizing means 3 is larger than the input power thereof), and continues to correct it until the output power becomes smaller than the input power. The corrected delay time is outputted to each of the delay means 24 and 25.

On the other hand, the complex amplitude correcting means 22 and 23 respectively correct the amplitudes of the outputs of the adding means, which have been delayed by the delay means 24 and 25, based on the result of calculation by the complex amplitude coefficient calculating means 27. Thus, the output of the adding means 21 is fed back through the feedback means comprising the delay means 24, 25 and the complex amplitude correcting means 22, 23 and is supplied to the input of the same adding means 21.

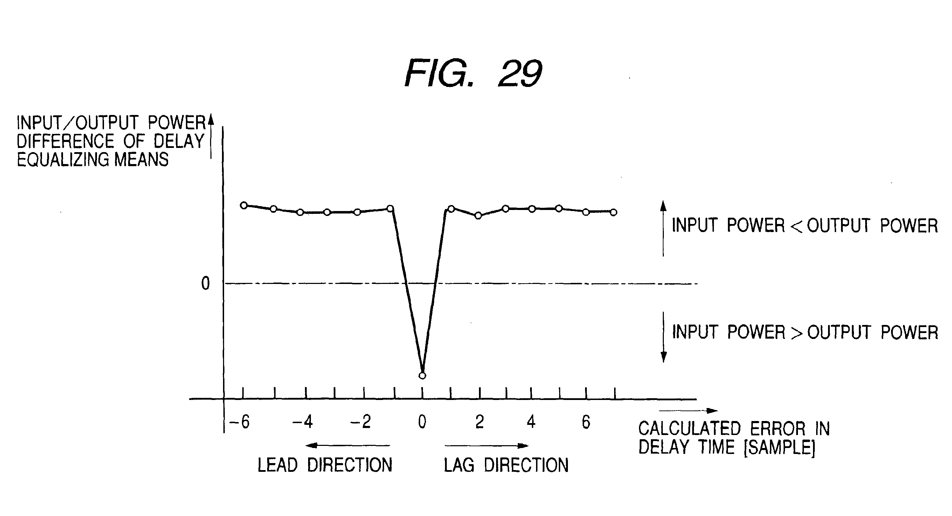

The principle of operation for activating the delay equalizing means 3 and power comparing means 9 shown in Fig. 24, correcting the delay time calculated by the delay time calculating means 28 and accurately removing the delayed wave will now be described in further details. Fig. 29 is a characteristic diagram showing the relationship between each calculated error in delay time calculated by the delay time calculating means 28 and each input/output power difference (corresponding to the difference between the signal power respectively detected by the power detecting means 7 and 8) developed in the delay equalizing means 3 at the time that the delay equalizing means 3 is activated based on the delay time. When the calculated error in delay time is now of the positive polarity, it is indicated that the delay time calculated by the delay time calculating means 28 is longer than a true delay time (each delayed wave arrives later). When the calculated error in delay time is of the negative polarity, the inverse thereof is indicated. When the input/output power difference is of the positive polarity, it is indicated that the output power of the delay equalizing means 3 is larger than the input power thereof. When the input/output power difference is of the negative polarity, the inverse thereof is indicated. Incidentally, a description will be made here assuming that the amount of correction by the delay time correcting means 26 is zero and the delay time calculated by the delay time calculating means 28 is set to the delay means 24, 25 without its correction.

When the delay time calculating means 28 calculates a delay time, based on a time indicative of a true auto-correlation peak (when the calculated error in delay time is zero) even when a plurality of auto-correlation peaks including a false auto-correlation peak are included in the auto-correlation signal detected by the auto-correlation detecting means 4, a signal delayed by the delay means 24, 25 by the calculated delay time is subtracted from the signal inputted to the delay equalizing means 3 by the adding means 21. Therefore, each delayed wave is perfectly canceled out and removed. Since, at this time, the output power of the adding means 21 is reduced by the signal power of the removed delayed wave, the output power becomes lower than the input power of the delay equalizing means 3. Thus, when the calculated error in delay time is zero as shown in Fig. 29, the input/output power difference of the delay equalizing means 3 indicates a negative value.

On the other hand, when the delay time calculating means 28 calculates a delay time, based on a time indicative of a false auto-correlation peak (when the calculated error in delay time is not zero), a signal delayed by the delay means 24, 25 for the calculated delay time alone is subtracted from the signal inputted to the delay equalizing means 3 by the adding means 21 with timing different from a delay time of a true delayed wave. Since, at this time, such a process as to add another delayed wave is executed as well as the unremoval of ht delayed wave, the output power of the adding means 21 increases by newly-added signal power. As a result, the output power becomes greater than the input power of the delay equalizing means 3. When the calculated error in delay time is not zero as shown in Fig. 29, the input/output power difference indicates a positive value.

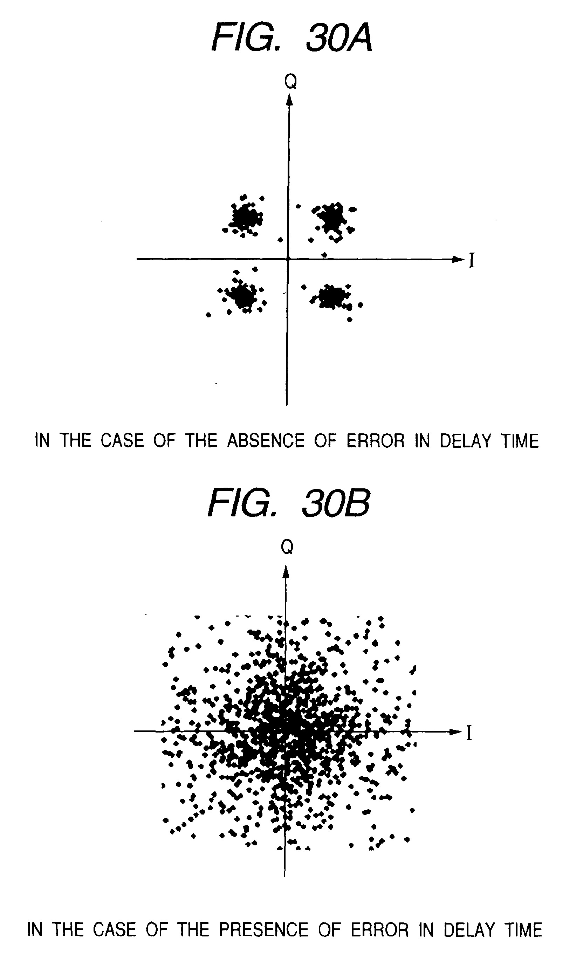

Fig. 30 is a characteristic diagram showing phase trajectories of demodulated symbols as viewed on the output side of the OFDM demodulating means 5, which are compared in the case of the presence and absence of calculated errors in delay time, and is a characteristic diagram at the time that carrier modulation of OFDM is QPSK. Since the output power of the delay equalizing means 3 becomes smaller than the input power thereof when the calculated error in delay time is zero and the delay equalizing means 3 is activated as shown in Fig. 30A, the power of each demodulated symbol is reduced. Thus, symbols placed in a state of converging on predetermined regions on an I-Q axis coordinate plane can be determined, and a post-demodulation bit error is reduced. On the other hand, since the output power of the delay equalizing means 3 becomes greater than the input power thereof when the calculated error in delay time takes place and the delay equalizing means 3 is activated as shown in Fig. 30B, the power of each demodulated symbol increases. Thus, symbols placed in a state of being distributed over an I-Q axis coordinate plane at random can be determined and hence bit errors increase.

Namely, when an error occur in the delay time calculated by the delay time calculating means 28, post-demodulation bit errors increase as well as the inability to remove each delayed wave. In this case, a relationship is established in which the output power of the delay equalizing means 3 becomes larger than the input power thereof, whereas the output power becomes smaller than the input power only when no error occurs in the calculated delay time.

Therefore, the delay equalizing means 3 and the power comparing means 9 shown in Fig. 24 are activated in the present embodiment. When the input and output power of the delay equalizing means 3 are first compared by the power comparing means 9 and the unremoval of each delayed wave is detected from its comparison, i.e., when the output power of the delay equalizing means 3 becomes larger than the input power thereof, the delay time correcting means 26 in the delay equalizing means 3 corrects a delay time. This operation is repeated until the output power becomes smaller than the input power. Thus, the delay time is accurately corrected and each delayed wave is exactly removed. As a result, the output of the OFDM demodulating means 5 is reduced in bit error. The above description indicates the principle of the operations of the delay equalizing means 3 and the power comparing means 9.

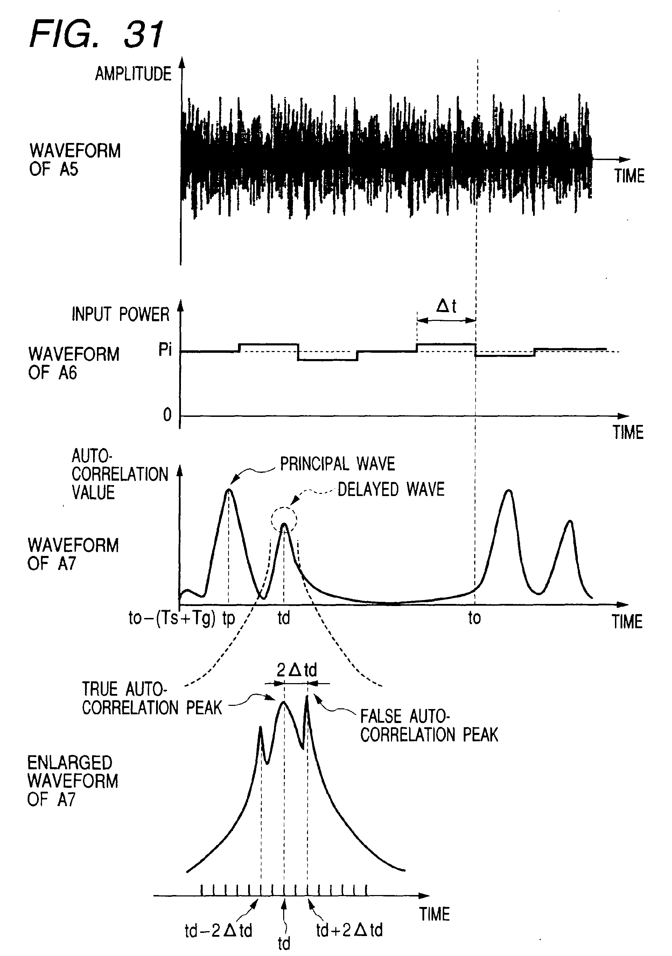

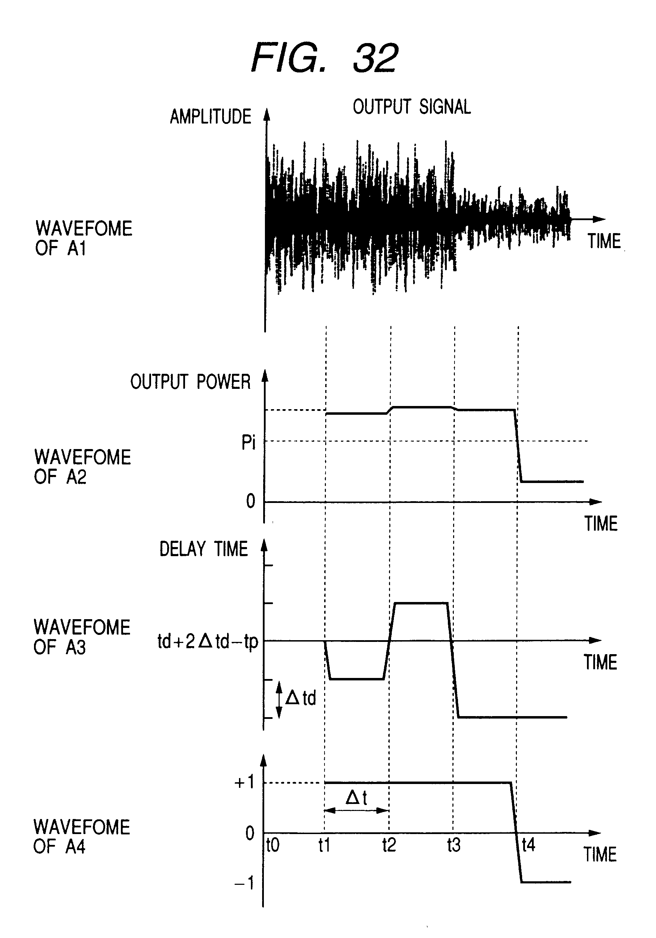

The operations of the delay equalizing means 3 and power comparing means 9 will next be explained in detail with reference to Figs. 31 and 32. Fig. 31 is a diagram showing one example illustrative of time waveforms of a signal A5 inputted to the delay equalizing means 3, a signal A7 outputted from the auto-correlation detecting means 5, and a signal A6 outputted from the power detecting means 7, of signal waveforms related to the OFDM receiving device shown in Fig. 24. Fig. 32 is a diagram showing one example illustrative of time waveforms of a signal A1 outputted from the delay equalizing means 3, a signal A2 outputted from the power detecting means 8, and a signal A3 outputted from the delay time correcting means 26 to the delay means 24. Here, an OFDM signal outputted from the receiving means 2 will be described assuming that carrier modulation is set as QPSK, and the OFDM signal is defined as such a signal (corresponding to a signal including two waves in total) that a principal wave and a delayed wave are respectively included one by one.

When the OFDM signal indicated by A5 is inputted to the power detecting means 7, the multiplying means 61 in the power detecting means 7 first calculates instantaneous signal power of the OFDM signal lying in a base band. Further, the accumulating means 62 accumulates instantaneous signal power corresponding to a predetermined sample number during a time interval $\Delta t$ to thereby calculate input power for the delay equalizing means 3 and outputs such a signal as indicated by A6 for each $\Delta t$. Since a variation in input power is low herein, the input power is set as substantially constant power Pi.

When the OFDM signal indicated by A5 is inputted to the auto-correlation detecting means 4, the auto-correlation detecting means 4 outputs an auto-correlation signal indicated by A7. Since the signal including the two waves in total corresponding to the principal wave and delayed wave is received, two auto-correlation peaks indicative of their incoming times are detected during one OFDM symbol period (Tg+Ts). In the present example, three local peaks are detected in the neighborhood of an auto-correlation peak related to the delayed wave. However, an auto-correlation peak at a time td indicates an incoming time for a true delayed wave, and auto-correlation peaks at times td-2$\Delta$td (where $\Delta$td: sample time interval) and td+2$\Delta$td indicate false incoming times respectively.

When the maximum/local maximum auto-correlation searching means 29 of the delay equalizing means 3 receives the auto-correlation signal indicated by A7 therein, it searches a maximum peak and a local maximum peak from the auto-correlation signal during one OFDM symbol period. During an OFDM symbol period of from a time t0-(Tg+Ts) to a time t0, the incoming time of the principal wave is defined as tp by reference to its maximum correlation peak. As to the delayed wave, control information in which a time td+2$\Delta$td indicative of the maximum value of local maximum correlation peaks is defined as an incoming time, is transmitted. Incidentally, since the incoming time of the delayed wave is calculated based on the false auto-correlation peak in this case, an error is included in the control information.

At the time t0, the delay time calculating means 28 calculates a delay time of a delayed wave, based on the control information. Since, in this case, the incoming time of the principal wave is given as tp, and the incoming time of the delayed wave is given as td+2$\Delta$td, the delay time is calculated as td+2$\Delta$td-tp. Since the subsequent delay time correcting means 26 is placed immediately after the calculation of the delay time, it brings the amount of correction for the delay time to zero in the meantime and sets td+2$\Delta$td-tp to the delay means 24 as a delay time. Incidentally, since the detected delayed wave is one, the delay time to be set to the delay means 25 is defined as zero.

Thus, each feedback means of the delay equalizing means 3 starts operating, based on the delay time set to the time t0. As a result, a signal indicated by A1 is outputted from the delay equalizing means 3 as shown in Fig. 32.

The subsequent power detecting means 8 receives a signal from the delay equalizing means 3 and calculates the output power for the delay equalizing means 3 according to an operation similar to the previous power detecting means 7, thereby outputting a signal indicated by A2. Here, the output power calculated for a Δt time interval of from the time t0 to a time t1 is outputted at the time t1. Subsequently, the output power is similarly updated each time the time elapses by Δt.

Next, the comparing means 6 compares signals outputted from the power detecting means 7 and 8, i.e., input and output power of the delay equalizing means 3, and outputs a signal indicated by A4 in Fig. 32. Since the output power is larger than the input power as indicated by A2 at a time t1, the comparing means 6 outputs +1 to the delay time correcting means 26. When the input and output power are placed in such a relationship, an error occurs in the set delay time and post-OFDM demodulation bit errors increase. Therefore, the delay time correcting means 26 starts to correct the delay time calculated by the delay time calculating means 28 after it has received the output of the comparing means 6.

Here, the delay time correcting means 26 refers to the result of comparison by the comparing means 6 each time the time elapses by Δt. When it indicates +1, the absolute amount of correction for the delayed time is successively increased in zigzag form while the polarity thereof is being inverted, as in the case of -Δtd, +Δtd, -2Δtd and +2Δtd. Since the delay time calculated by the delay time calculating means 28 is given as td+2Δtd-tp at the initial or early time t0 in the present embodiment, the delay time corrected by the delay time correcting means 26 and set to the delay means 24 is set as in the case of td+Δtd-tp at a time t1, td+3Δtd-tp at a time t2, and td-tp at a time t3 as indicated by A3 in Fig. 32.

Thus, when the delay equalizing means 3 and the power comparing means 9 are continuously operated, the delay time correcting means 26 makes a correction of the delay time to td-tp at the time t3 and sets it to the delay means 24. In other words, this is equivalent to the fact that the maximum/local maximum auto-correlation searching means 29 refers to a true auto-correlation peak in auto-correlation peaks related to the delayed wave of the auto-correlation signal indicated by A7 and transmits control information in which the incoming time of the delayed wave is set as td. Namely, since no error occurs in the incoming time of the delayed wave, the delay time set by the delay means 24 has no error either. Thus, each delayed wave is accurately removed by its corresponding feedback means of the delay equalizing means 3, and an OFDM signal including only a principal wave is outputted from the delay equalizing means 3.

When the power detecting means 8 calculates the output power of the delay equalizing means 3 during a period of from subsequent times t3 to t4, the output power becomes smaller than the input power of the delay equalizing means 3 at the time t4 as indicated by A2 in Fig. 32, and the comparing means 6 outputs -1 to the delay time correcting means 26. When the input and output power are placed in such a relationship, no error occurs in the set delay time and post-OFDM demodulation bit errors decrease. Therefore, the delay time correcting means 26 stops a correction to the delay time in response to the output of the comparing means 6.

Thus, the delay equalizing means 3 accurately removes each signal component delayed over a guard interval time, based on the result of detection by the auto-correlation detecting means 4 and the result of comparison by the power comparing means 9 and generates an OFDM signal including only a principal wave. The OFDM demodulating means 5 eliminates a guard interval inserted upon modulation through the use of the signal to thereby extract an interference-free effective symbol, and demodulates data after its Fourier transformation.

The guard interval can be removed with the auto-correlation signal outputted by the auto-correlation detecting means 4 as the reference upon removal of the guard interval. In doing so, the OFDM demodulating means 211 of the conventional OFDM receiving device has needed to additionally obtain the auto-correlation signal. However, the embodiment of the present invention eliminates for the need of this operation.

Thus, when the delay equalizing means 3 and the power comparing means 9 are operated to cause the OFDM demodulating means 5 to perform demodulation, demodulated symbols outputted from the OFDM demodulating means result in a distribution equivalent to such an extent that the symbols cannot be determined, as shown in Fig. 30B. However, when no error appears in the delay time of the delay means 24 and each delayed wave is perfectly removed, symbols are easily determined as shown in Fig. 30A, so that a bit error is reduced.

Incidentally, while the embodiment of the present invention has described the case in which one delay equalizing means is provided and one delay time correcting means performs a correction for a delay time in lead and lag directions by turns. However, the present invention is not limited to it. For instance, a plurality of delay equalizing means may be placed so as to independently correct delay times in lead and lag directions respectively.

In another embodiment of the present invention as well, feedback means included in a delay equalizing means are set as two systems and configured so as to remove delayed waves up to two waves at maximum. However, the present invention is not limited to it. The number of the feedback means may be set to one system or three systems or more.

Further, the further embodiment of the present invention has described the case where a plurality of peaks locally exist in an auto-correlation peak related to a delayed wave in an auto-correlation signal. However, even if a plurality of local peaks exist in an auto-correlation peak related to a principal wave, the present embodiment can be activated similarly.

According to the present invention as described above, there is provided an OFDM receiving device having an auto-correlation detecting means for detecting auto-correlation of each OFDM modulated signal, a delay equalizing means for eliminating each of signal components delayed over a guard interval time of the OFDM modulated signal, based on the result of detection by the auto-correlation detecting means, and an OFDM demodulating means for eliminating a guard interval signal inserted upon modulation from the output signal of the delay equalizing means and extracting and demodulating an effective symbol signal. The delay equalizing means stops its delay equalizing operation when the level of the delayed signal component is low. Therefore, an OFDM receiving device, which performs the delay equalization of OFDM modulated signals at a stage preceding OFDM demodulation, is obtained which is capable of achieving low power consumption of the delay equalizing means.

According to an OFDM receiving device as well, an effect is obtained in that a power comparing means for comparing input and output power for a delay equalizing means is provided in the delay equalizing means and activated to thereby allow the elimination of delayed waves stabler, whereby an output signal having a sufficient CN ratio can be obtained and a post-demodulation bit error can be eliminated.

**Claims**

1.  An OFDM receiving device comprising:

    auto-correlation detecting means which detects auto-correlation of an OFDM modulated signal;
    delay equalizing means which removes a signal component delayed over a guard interval time of the OFDM modulated signal, based on the result of detection by the auto-correlation detecting means; and
    OFDM demodulating means which eliminates a guard interval signal inserted upon modulation from a signal outputted from the delay equalizing means and extracts and demodulates an effective symbol signal,
    wherein the delay equalizing means stops a delay equalizing operation when the level of the delayed signal component is low.

2.  The OFDM receiving device according to claim 1, wherein the delay equalizing means includes,

    feedback means each of which feeds back the output signal of the delay equalizing means, based on a delay time calculated from a maximum auto-correlation value in local maximum auto-correlation values other than the maximum auto-correlation value, of auto-correlation values detected by the auto-correlation detecting means, and a complex amplitude coefficient calculated from the local maximum auto-correlation values, and
    delay signal level determining means which determines the level of the delayed signal component, based on the auto-correlation values.

3.  The OFDM receiving device according to claim 1 or 2, wherein when the delay signal level determining means determines that the level of the delayed signal component is lower than that of a main signal component, the delay equalizing means bypasses the input of the delay equalizing means to the output thereof.

4.  The OFDM receiving device according to claim 1 or 2, wherein when the delay signal level determining means determines that the level of the delayed signal component is lower than that of a main signal component, the delay equalizing means controls all or some of the outputs of the feedback means to zero.

5.  The OFDM receiving device according to claim 3 or 4, wherein when the delay signal level determining means determines that the level of the delayed signal component is lower than that of a main signal component, the delay equalizing means stops the operation of the each feedback means.

6.  An OFDM receiving device comprising:

    auto-correlation detecting means which detects auto-correlation of an OFDM modulated signal;
    delay equalizing means which removes a signal component delayed over a guard interval time of the OFDM modulated signal, based on the result of detection by the auto-correlation detecting means;
    power comparing means which compares power inputted to the delay equalizing means and power outputted therefrom; and
    OFDM demodulating means which eliminates a guard interval signal inserted upon modulation from a signal outputted from the delay equalizing means and extracts and demodulates an effective symbol signal,
    wherein the delay equalizing means is provided with delay time correcting means which corrects a delay time for the output signal of the delay equalizing means, based on the result of comparison by the power comparing means.

7.  The OFDM receiving device according to claim 6, wherein the delay equalizing means is provided with feedback means each of which feeds back the output signal of the delay equalizing means, based on a delay time calculated from a maximum auto-correlation value in local maximum auto-correlation values other than the maximum auto-correlation value, of auto-correlation values detected by the auto-correlation detecting means, and a complex amplitude coefficient calculated from the local maximum auto-correlation values, and the delay time correcting means corrects a delay time for the each feedback means.

8. The OFDM receiving device according to claim 6, wherein the delay time correcting means refers to the result of comparison by the power comparing means and corrects the delay time when the output power of the delay equalizing means is judged to be larger than the input power thereof.

9. The OFDM receiving device according to claim 6, wherein the delay time correcting means refers to the result of comparison by the power comparing means and continuously corrects the delay time until the output power of the delay equalizing means is judged to be lower than the input power thereof.

10. The OFDM receiving device according to claim 6, wherein the OFDM demodulating means eliminates a guard interval signal from the output signal of the delay equalizing means with the time when a maximum auto-correlation value indicative of a maximum value, of auto-correlation values detected by the auto-correlation detecting means is detected, as the reference, and extracts an effective symbol signal.

# FIG. 1

```
  1           2                                    31,31A              5
  ▷  ───→  [REC] ──┬──────────────────────→  [DELAY      ] ──→ [OFDM         ] ──○
                   │                           [EQUALIZING ]      [DEMODULATING]
                   │                           [MEANS      ]      [MEANS       ]
                   │                                 ↑
                   │                  4
                   └──→  [AUTO-CORRELATION ]─────────┘
                         [DETECTING MEANS  ]
```

# FIG. 2

```
        4
  145                141
                 [EFFECTIVE      ]
   ○ ──┬────────→[SYMBOL TIME    ]────┐
      │          [DELAYING MEANS ]    │   143              144
      │                               ↓                            146
      │                              (×)──→ [ACCUMULATING] ──→  ○
      │                142           ↑      [MEANS       ]
      │          [COMPLEX         ]  │
      └─────────→[CONJUGATE SIGNAL ]─┘
                 [GENERATING MEANS ]
```

# FIG. 3

31

DELAY EQUALIZING MEANS

OUTPUT OF RECEIVING MEANS 2

ADDING MEANS — 41

OFDM DEMOODULATING MEANS 5

COMPLEX AMPLITUDE CORRECTING MEANS — 43

DELAY MEANS — 42

50

X  A○
   B○

C

COMPLEX AMPLITUDE CORRECTING MEANS — 45

DELAY MEANS — 44

51

X  A○
   B○

C

COMPLEX AMPLITUDE COEFFICIENT CALCULATING MEANS

DELAY TIME CALCULATING MEANS

C

DELAY SIGNAL LEVEL DETERMINING MEANS — 49

48

47

MAXIMUM/LOCAL MAXIMUM AUTO-CORRELATION SEARCHING MEANS — 46

OUTPUT OF AUTO-CORRELATION DETECTING MEANS 4

EP 1 150 470 A2

# FIG. 4

24

# FIG. 5

DELAY EQUALIZING MEANS

33

OUTPUT OF RECEIVING MEANS 2

OFDM DEMOODULATING MEANS 5

53

55

41 ADDING MEANS

54

59

43 COMPLEX AMPLITUDE CORRECTING MEANS

42 DELAY MEANS

45 COMPLEX AMPLITUDE CORRECTING MEANS

44 DELAY MEANS

48 COMPLEX AMPLITUDE COEFFICIENT CALCULATING MEANS

47 DELAY TIME CALCULATING MEANS

49 DELAY SIGNAL LEVEL DETERMINING MEANS

46 MAXIMUM/LOCAL MAXIMUM AUTO-CORRELATION SEARCHING MEANS

OUTPUT OF AUTO-CORRELATION DETECTING MEANS 4

# FIG. 6

34

DELAY EQUALIZING MEANS

OUTPUT OF RECEIVING MEANS 2

ADDING MEANS — 41

OFDM DEMOODULATING MEANS 5

COMPLEX AMPLITUDE CORRECTING MEANS — 43

DELAY MEANS — 42

COMPLEX AMPLITUDE CORRECTING MEANS — 45

DELAY MEANS — 44

COMPLEX AMPLITUDE COEFFICIENT CALCULATING MEANS — 48

DELAY TIME CALCULATING MEANS — 47

C

DELAY SIGNAL LEVEL DETERMINING MEANS — 49

C

MAXIMUM/LOCAL MAXIMUM AUTO-CORRELATION SEARCHING MEANS — 46

OUTPUT OF AUTO-CORRELATION DETECTING MEANS 4

26

# FIG. 7

35

DELAY EQUALIZING MEANS

OUTPUT OF RECEIVING MEANS 2

ADDING MEANS — 41

OFDM DEMOODULATING MEANS 5

COMPLEX AMPLITUDE CORRECTING MEANS — 43

DELAY MEANS — 42

COMPLEX AMPLITUDE CORRECTING MEANS — 45

DELAY MEANS — 44

COMPLEX AMPLITUDE COEFFICIENT CALCULATING MEANS — 48

DELAY TIME CALCULATING MEANS — 47

DELAY SIGNAL LEVEL DETERMINING MEANS — 49

C

MAXIMUM/LOCAL MAXIMUM AUTO-CORRELATION SEARCHING MEANS — 46

OUTPUT OF AUTO-CORRELATION DETECTING MEANS 4

# FIG. 8

31

DELAY EQUALIZING MEANS

OUTPUT OF
RECEIVING
MEANS 2

ADDING
MEANS 41

OFDM
DEMOODULATING
MEANS 5

CK1

COMPLEX
AMPLITUDE
CORRECTING
MEANS 43

DELAY
MEANS 42

X A
B

50
C

CK2

CK1

COMPLEX
AMPLITUDE
CORRECTING
MEANS 45

DELAY
MEANS 44

X A
B

51
C

CK2

CK1

COMPLEX
AMPLITUDE
COEFFICIENT
CALCULATING
MEANS 48

DELAY TIME
CALCULATING
MEANS 47

DELAY
SIGNAL
LEVEL
DETERMINING
MEANS 49

C

CK2

CK1

CK1

CK2

CK1

58

B X
A C

MAXIMUM/LOCAL
MAXIMUM
AUTO-CORRELATION
SEARCHING MEANS 46

CK1

CLOCK INPUT

OUTPUT OF
AUTO-CORRELATION
DETECTING MEANS 4

EP 1 150 470 A2

## FIG. 9

# FIG. 10

# FIG. 11

AUTO-CORRELATION VALUE

(a) WHEN DELAY SIGNAL LEVEL IS HIGH

(b) WHEN DELAY SIGNAL LEVEL IS LOW

TIME

PRINCIPAL WAVE

DELAYED WAVE

AUTO-CORRELATION CHARACTERISTIC

# FIG. 12A

Q

I

DATA SYMBOL OF PRINCIPAL WAVE

# FIG. 12B

Q

I

DATA SYMBOL OF DELAYED WAVE

POSITIONS OF DATA SYMBOLS OF RESPECTIVE WAVES AFTER OFDM DEMODULATION

# FIG. 13A

INTERFERENCE
REGIONS

WHEN DELAY SIGNAL LEVEL IS HIGH

# FIG. 13B

WHEN DELAY SIGNAL LEVEL IS LOW

PHASE TRAJECTORIES OF DATA SYMBOLS OF COMPOSITE
SIGNALS AFTER OFDM DEMODULATION

# FIG. 14

49

DELAY SIGNAL LEVEL DETERMINING MEANS

OUTPUT OF
MAXIMUM/LOCAL
MAXIMUM
AUTO-CORRELATION
SEARCHING
MEANS 46

MAXIMUM
VALUE
EXTRACTING
MEANS — 491

MAXIMUM
VALUE
EXTRACTING
MEANS — 492

COMPARING
MEANS — 493

C

# FIG. 15

A0

A1

TIME

PRINCIPAL
WAVE

DELAYED
WAVE

AUTO-CORRELATION DETECTION SIGNAL
(MAGNITUDE OF AUTO-CORRELATION VALUE)

# FIG. 16

C

1
(DELAY SIGNAL
LEVEL: HIGH)

0
(DELAY SIGNAL
LEVEL: LOW)

$\Delta M/\alpha$

$\Delta A = A0/\sqrt{2} - A1$

OUTPUT CHARACTERISTIC
OF COMPARING MEANS

# FIG. 17

Q

$\Delta M$

$\Delta B = B0/\sqrt{2} - B1$

B1

B0

I

MARGIN
REGION

$B0 = \alpha A0$
$B1 = \alpha A1$
$\alpha$ ; PROPORTIONALITY
FACTOR

PHASE TRAJECTORIES OF DATA SYMBOLS AT
OUTPUT OF OFDM DEMODULATING MEANS

# FIG. 18
## PRIOR ART

191

OFDM MODULATING MEANS

192      193      194      195      196      197   198

| MODULATING MEANS | S/P | IFFT | P/S | GUARD INTERVAL INSERTING MEANS | TX |

EP 1 150 470 A2

# FIG. 19
# PRIOR ART

MODULATED
SYMBOLS

EP 1 150 470 A2

# FIG. 20
# PRIOR ART

211

OFDM DEMODULATING MEANS

212    213    214    215    216    217    218

▷ → | REC | → | EFFECTIVE SYMBOL EXTRACTING MEANS | → | S/P | ⇒ | FFT | ⇒ | P/S | → | DEMODULATING MEANS | → ○

# FIG. 21
# PRIOR ART

EP 1 150 470 A2

## FIG. 22
## PRIOR ART

AUTO-CORRELATION
DETECTION RESULT

OFDM SYMBOL

Tg : GUARD INTERVAL

Ts : EFFECTIVE SYMBOL

PRINCIPAL WAVE — SYMBOL (i−1) | SYMBOL i | SYMBOL (i+1)

DELAYED WAVE 1 — SYMBOL (i−1) | SYMBOL i | SYMBOL (i+1)

DELAYED WAVE 2 — SYMBOL (i−1) | SYMBOL i | SYMBOL (i+1)

INTERFERENCE REGION

COMPOSITE WAVE
(AFTER EXTRACTION OF
EFFECTIVE SYMBOL) — SYMBOL (i−1) | SYMBOL i | SYMBOL (i+1)

INTERFERENCE REGIONS AT EFFECTIVE SYMBOLS

t11  t13    t21  t23    TIME
t12         t22

# FIG. 23

# FIG. 24

EP 1 150 470 A2

## FIG. 25

## FIG. 26

DELAY EQUALIZING MEANS — 3

ADDING MEANS — 21

2 RECEIVING MEANS

COMPLEX AMPLITUDE CORRECTING MEANS — 22

COMPLEX AMPLITUDE CORRECTING MEANS — 23

A3

DELAY MEANS — 24

DELAY MEANS — 25

5 OFDM DEMODULATING MEANS

27 COMPLEX AMPLITUDE COEFFICIENT CALCULATING MEANS

DELAY TIME CORRECTING MEANS — 26

28 DELAY TIME CALCULATING MEANS

29 MAXIMUM/LOCAL MAXIMUM AUTO-CORRELATION SEARCHING MEANS

4 AUTO-CORRELATION DETECTING MEANS

6 COMPARING MEANS

EP 1 150 470 A2

# FIG. 27

7,8

POWER DETECTING MEANS

61

62

ACCUMULATING MEANS

40

COMPLEX CONJUGATE SIGNAL GENERATING MEANS

# FIG. 28

DELAY TIME CORRECTING MEANS

26

6

COMPARING MEANS

POSITIVE AND NEGATIVE DETERMINING MEANS

64

−    +

63

7

8

ADDING MEANS

## FIG. 29

# FIG. 30A

IN THE CASE OF THE ABSENCE OF ERROR IN DELAY TIME

# FIG. 30B

IN THE CASE OF THE PRESENCE OF ERROR IN DELAY TIME

# FIG. 31

AMPLITUDE

WAVEFORM
OF A5

TIME

INPUT POWER

WAVEFORM
OF A6

$\Delta t$

Pi

0

TIME

AUTO-
CORRELATION
VALUE

PRINCIPAL WAVE

DELAYED WAVE

WAVEFORM
OF A7

$to-(Ts+Tg)$ tp    td              to    TIME

TRUE AUTO-
CORRELATION PEAK

$2\Delta td$

FALSE AUTO-
CORRELATION PEAK

ENLARGED
WAVEFORM
OF A7

TIME

$td-2\Delta td$    td    $td+2\Delta td$

# FIG. 32

WAVEFOME
OF A1

AMPLITUDE

OUTPUT SIGNAL

TIME

WAVEFOME
OF A2

OUTPUT POWER

Pi

0

TIME

WAVEFOME
OF A3

DELAY TIME

$td+2\Delta td-tp$

$\Delta td$

TIME

WAVEFOME
OF A4

$+1$

$\Delta t$

0

$t0$  $t1$  $t2$  $t3$  $t4$

$-1$

TIME